# EUROPÄISCHE PATENTSCHRIFT

(11) **EP 4 293 419 B1**
(45) Veröffentlichungstag und Bekanntmachung des Hinweises auf die Patenterteilung: **12.11.2025**
(21) Anmeldenummer: 23206873.4
(22) Anmeldetag: 05.05.2021
(51) Int. Cl.: G03B 3/12, G03B 7/10, G03B 17/18, G03B 17/56

(54) **FERNSTEUEREINRICHTUNG FÜR EINE BEWEGTBILDKAMERA UND KENNZEICHNUNGSRING FÜR EINE FERNSTEUEREINRICHTUNG**
REMOTE CONTROL DEVICE FOR A MOVING IMAGE CAMERA AND IDENTIFICATION RING FOR A REMOTE CONTROL DEVICE
DISPOSITIF DE TÉLÉCOMMANDE POUR UNE CAMÉRA À IMAGES EN MOUVEMENT ET BAGUE D'IDENTIFICATION POUR UN DISPOSITIF DE TÉLÉCOMMANDE

(30) Priorität: 07.05.2020 DE 102020112458
(43) Veröffentlichungstag der Anmeldung: 20.12.2023
(62) Teilanmeldung aus: 21172267.3
(73) Patentinhaber: Arnold & Richter Cine Technik GmbH & Co. Betriebs KG, 80807 München (DE)
(72) Erfinder: VOSS, Hendrik, 81673 München (DE)
(74) Vertreter: Manitz Finsterwald Patent- und Rechtsanwaltspartnerschaft mbB

(56) Entgegenhaltungen:
- EP-A1- 0 574 105
- EP-A2- 2 605 064
- EP-B1- 2 338 085
- GB-A- 2 413 644
- US-A1- 2003 025 802

## Beschreibung

Die Erfindung betrifft eine Fernsteuereinrichtung zum Erzeugen von Stellsignalen für einen Objektiv-Stellmotor einer Bewegtbildkamera, mit einer Bedieneinheit, die ein Basisteil, ein relativ zu dem Basisteil um eine Drehachse drehbares Bedienelement zum Einstellen von Steuerbefehlen für den Objektiv-Stellmotor und einen Positionsgeber aufweist, welcher dazu ausgebildet ist, eine jeweilige Drehstellung des Bedienelementes relativ zu dem Basisteil zu erfassen und entsprechende Positionssignale zu erzeugen. Die Positionssignale dienen letztlich zur entsprechenden Ansteuerung des Objektiv-Stellmotors.

Eine elektronische Bewegtbildkamera umfasst üblicherweise ein integriertes optisches System (Kameraobjektiv) oder einen Objektivanschluss, um wahlweise ein jeweiliges, an bestimmte Aufnahmesituationen angepasstes Wechselobjektiv anschließen zu können. Um die mittels des optischen Systems erfassten Bilder aufzeichnen zu können, sind meist ein elektronischer Bildsensor zum Erzeugen von Bildsignalen aus einfallendem Licht und eine Bildsignalverarbeitungseinrichtung zum Umwandeln der Bildsignale in einen digitalen Bilddatenstrom vorgesehen.

Eine Fernsteuereinrichtung kann dabei vorgesehen sein, um eine elektronische Bewegtbildkamera (insbesondere Videokamera) oder auch eine herkömmliche Bewegtbildkamera (insbesondere Filmkamera) zum Aufnehmen von Bewegtbildsequenzen anzusteuern und/oder Aufnahmeparameter einstellen bzw. während einer Aufnahme verändern zu können. Ein die Bewegtbildkamera führender Kameramann muss dadurch lediglich die korrekte und sich gegebenenfalls verändernde Ausrichtung der Kamera zur Aufnahme eines gewünschten Bildausschnitts sicherstellen, während die korrespondierende Einstellung der Aufnahmeparameter von einer weiteren Person, einem Kameraassistenten oder einem Schärfezieher, übernommen werden kann. Beispielsweise kann es vorgesehen sein, die Bildaufnahmefrequenz, die Verschlusszeit, die Irisblendenöffnung, die Fokuslage bzw. die Schärfe oder die Brennweite (Zoom-Faktor) des Kameraobjektivs ferngesteuert und insbesondere in einer zuvor zwischen dem Kameramann und dem Benutzer der Fernsteuereinrichtung abgesprochenen Abfolge während einer Aufnahme anzupassen.

Fernsteuereinrichtungen für Bewegtbildkameras sind beispielsweise aus EP 2 605 064 A2, EP 0 574 105 A1 und EP 2 338 085 B1 bekannt.

Die Einstellung von Parametern der Kamera und insbesondere der Irisblendenöffnung, der Fokuslage und der Brennweite kann über jeweilige Objektiv-Stellmotoren erfolgen, die in das Kameraobjektiv integriert oder typischerweise als separate, externe Einheit außerhalb des Kameraobjektivs angeordnet sein können. Ein solcher Objektiv-Stellmotor kann mit einem drehbaren Objektivring des Kameraobjektivs verbunden sein, so dass der betreffende Parameter durch Drehen des Objektivrings mittels des Objektiv-Stellmotors verändert werden kann. Eine ferngesteuerte Einstellung der Aufnahmeparameter kann somit durch die Übermittlung von Stellsignalen an den jeweiligen Objektiv-Stellmotor mittels einer Fernsteuereinrichtung erfolgen, um den zugeordneten Objektivrings in eine gewünschte Drehstellung zu überführen. Eine solche Fernsteuereinrichtung ist beispielsweise aus DE 196 29 484 A1 und WO 2010/046237 A1 bekannt. Ferner zeigt beispielsweise DE 42 19 331 A1 eine Fernsteuereinrichtung zum Einstellen unterschiedlicher Aufnahmeparameter vor und insbesondere während einer Bewegtbildaufnahme durch Ansteuern jeweiliger Objektiv-Stellmotoren.

Um einen Steuerbefehl für einen Objektiv-Stellmotor zum Einstellen eines bestimmten Parameterwertes auswählen zu können, weisen die Bedieneinheiten solcher Fernsteuereinrichtungen häufig ein relativ zu einem Basisteil drehbares Bedienelement auf, dessen Drehstellung den jeweiligen Steuerbefehl bestimmt. Aus der Drehstellung des Bedienelementes ist entsprechend das zugehörige Stellsignal für den Objektiv-Stellmotor von der Fernsteuereinrichtung zu ermitteln und zu erzeugen, wozu eine Zuordnung der mittels eines Positionsgebers erfassten und durch jeweilige Positionssignale angezeigten Drehstellungen des Bedienelementes zu den jeweiligen Stellsignalen erforderlich ist. Insbesondere kann ein Stellsignal dabei diejenige Drehstellung eines Objektivrings bezeichnen, welche den anzupassenden Parameter, beispielsweise eine Fokuslage, auf den gewünschten Wert einstellt und damit den Steuerbefehl erfüllt. Der jeweilige Steuerbefehl kann somit insbesondere einem Soll-Wert entsprechen, auf welchen der von dem Objektivring beeinflusste Parameter einzustellen ist, und das zugehörige Stellsignal für den Objektiv-Stellmotor bewirkt die Umsetzung des jeweiligen Steuerbefehls.

Die Zuordnung der Stellsignale zu jeweiligen Positionssignalen kann dabei anhand einer Zuordnungsvorschrift erfolgen, häufig als Mapping bezeichnet, welche innerhalb der Fernsteuereinrichtung gespeichert sein kann, insbesondere in der Bedieneinheit oder in einer hiervon separaten, der Bewegtbildkamera bzw. dem Kameraobjektiv zugeordneten Einheit (einschließlich der Bewegtbildkamera selbst). Die Fernsteuereinrichtung kann eine (wiederum in die Bedieneinheit integrierte oder hiervon separate) Auswerte- und Steuereinrichtung aufweisen, welche dazu ausgebildet ist, gemäß einer solchen Zuordnungsvorschrift in Abhängigkeit von den Positionssignalen des Positionsgebers die Stellsignale für den Objektiv-Stellmotor der zugeordneten Bewegtbildkamera zu ermitteln. Die Zuordnungsvorschrift kann hierfür von der Auswerte- und Steuereinrichtung ausgelesen und/oder berechnet werden.

Um einem Benutzer der Fernsteuereinrichtung wiederum die Zuordnung der eingestellten Drehstellungen des Bedienelementes zu jeweiligen Steuerbefehlen bzw. zu tatsächlich eingestellten Werten des Parameters anzuzeigen, können drehfest mit dem Bedienelement verbundene bzw. verbindbare Kennzeichnungsringe vorgesehen sein. Diese können eine sichtbare Kennzeichnung tragen, wie eine Skala der Werte der Fokuslage, sodass einem Benutzer der aus einer eingestellten Drehstellung folgende Effekt stets angezeigt werden kann. Zusätzlich kann die Bedieneinheit auch eine elektronische Anzeigeeinrichtung aufweisen, um eingestellte Steuerbefehle und/oder tatsächlich eingestellte Werte des jeweiligen Aufnahmeparameters anzuzeigen.

Insbesondere die Einstellung einer Fokuslage weist häufig eine 1/x-Abhängigkeit von der Drehstellung eines Objektivrings auf, so dass sich die tatsächlich eingestellte Fokuslage invers proportional zu der Drehstellung des Objektivrings verhält (z.B. Fokuslage [m] = 360°/x; somit Fokuslage unendlich für Drehstellung 0°; Fokuslage bei Nahbereichsgrenze 1 m für Drehstellung 360°), In derartigen Fällen ist meist auch eine solche 1/x-Abhängigkeit der Fokuslage von der Drehstellung des Bedienelementes der Fernsteuereinrichtung gewünscht. Eine Drehung des Bedienelementes kann somit direkt (1:1) in eine Drehung des Objektivrings übersetzt werden, so dass die Bedienung der Fernsteuereinrichtung intuitiv ausgeführt werden kann und mit einer direkten Bedienung des Objektivrings im Wesentlichen übereinstimmt. Die Zuordnungsvorschrift zur Zuordnung von Stellsignalen für den Objektiv-Stellmotor zu Positionssignalen des Positionsgebers kann dabei einem unmittelbaren Weitergeben der Positionssignale entsprechen, um den Objektivring auf eine derjenigen des Bedienelementes entsprechende Drehstellung einzustellen. Auch lineare Zuordnungsvorschriften können vorgesehen sein, um beispielsweise ungleiche Wertebereiche für die Positionssignale bzw. Drehstellungen des Bedienelementes und für die Stellsignale bzw. Drehstellungen eines Objektivrings aufeinander abbilden zu können.

In bestimmten Aufnahmesituationen bzw. bei bestimmten Szenen kann es jedoch gewünscht sein, von einer reinen Übersetzung der Drehstellung des Bedienelementes in eine Drehstellung eines jeweiligen Objektivrings abzuweichen, um beispielsweise einen ohnehin nicht genutzten Nahbereich des Objektivs auszuschließen und durch Drehungen des Bedienelementes Einstellungen der Fokuslage lediglich in einem für die Szene relevanten Fokusbereich vornehmen zu können. Daher können auch lineare Zuordnungsvorschriften vorgeschrieben sein, die beispielsweise einer minimalen Drehstellung des Bedienelementes eine Drehstellung des einzustellenden Objektivrings zuordnen, welche einer von der Nahbereichsgrenze abweichende Fokuslage entspricht. Durch solche lineare Zuordnungsvorschriften kann, neben dem beschriebenen Offset von der Nahbereichsgrenze, auch eine Stauchung oder Streckung der 1/x-Abhängigkeit zwischen der Drehstellung des Bedienelementes und dem Wert des eingestellten Parameters (z.B. Fokuslage) erfolgen.

Um einem Benutzer solche verschiedenen Zuordnungsvorschriften anzeigen zu können, können verschiedene der genannten Kennzeichnungsringe vorgesehen werden. Dabei kann eine Fernsteuereinrichtung ein Auswahlmenü aufweisen, durch welches ein Benutzer aus einer Auswahl zur Verfügung stehender Kennzeichnungsringe den jeweiligen gekoppelten Kennzeichnungsring auswählen kann, um der Auswerte- und Steuereinrichtung die zu nutzende Zuordnungsvorschrift anzuzeigen.

Während die genannten Einstellmöglichkeiten zwar gewisse Anpassungen der Fernsteuereinrichtung ermöglichen, bleiben diese wenig individualisierbar und beispielsweise durch die Anzahl gespeicherter Kennzeichnungsringe beschränkt. Auch muss ein Benutzer zunächst zeitaufwendig den jeweiligen gekoppelten Kennzeichnungsring auswählen, um die sich aus dessen Kennzeichnung ergebende Zuordnungsvorschrift nutzen zu können.

Ferner können sich insbesondere Bewegtbildaufnahmen als schwierig erweisen, während derer eine Fokuslage langsam und kontinuierlich zu verändern ist, um beispielsweise einem sich langsam von der Bewegtbildkamera entfernenden Objekt zu folgen. Insbesondere, wenn bereits eine verhältnismäßig große Fokuslage eingestellt ist, kann die beschriebene 1/x-Abhängigkeit der Fokuslage von der Drehstellung des Bedienelementes zu schwer kontrollierbaren Einstellungen und verhältnismäßig großen Veränderungen der Fokuslage bei lediglich kleinen Veränderungen der Drehstellung des Bedienelementes führen. Auch kann ein kontinuierliches Verfolgen eines Objektes bei einer 1/x-Abhängigkeit der Fokuslage von der Drehstellung des Bedienelementes schwierig sein, da äquidistante Veränderungen des Abstandes des Objektes von der Kamera in Abhängigkeit von der Position des Objektes unterschiedliche Veränderungen der Drehstellung des Bedienelementes erfordern.

Ein weiteres Problem bekannter Fernsteuereinrichtungen besteht darin, dass diese nicht leicht eine automatische Erfassung von anwendungsspezifischen Betriebsdaten, wie beispielsweise einer individualisierten Zuordnungsvorschrift oder eines verwendeten Kameraobjekts ermöglichen. Auch das benutzerindividuelle Speichern derartiger Betriebsdaten ist nicht immer zufriedenstellend möglich.

Es ist daher eine Aufgabe der Erfindung, eine Fernsteuereinrichtung zum Steuern eines Objektiv-Stellmotors einer Bewegtbildkamera zu schaffen, welche eine flexiblere, einfache und schnelle Anpassung an jeweilige Aufnahmesituationen ermöglicht.

Diese Aufgabe wird gelöst durch eine Fernsteuereinrichtung mit den Merkmalen des Anspruchs 1.

Die Fernsteuereinrichtung kann eine Auswerte- und Steuereinrichtung aufweisen, die dazu ausgebildet ist, gemäß einer Zuordnungsvorschrift in Abhängigkeit von den Positionssignalen des Positionsgebers Stellsignale für den Objektiv-Stellmotor zu ermitteln, wobei die Zuordnungsvorschrift wenigstens einem mathematischen Funktionszusammenhang entspricht, und dass die Fernsteuereinrichtung eine Eingabeeinrichtung aufweist, über welche der mathematische Funktionszusammenhang der Zuordnungsvorschrift durch Benutzereingabe konfigurierbar ist.

Die Zuordnungsvorschrift bzw. das Mapping definiert dabei die Zuordnung von verschiedenen Werten des mittels des Positionsgebers erzeugten Positionssignals zu entsprechenden Werten des Stellsignals für den Objektiv-Stellmotor. Das Positionssignal kann dabei insbesondere eine jeweilige Drehstellung des Bedienelementes relativ zu dem Basissteil kennzeichnen, während der Wert des Stellsignals einer Drehstellung eines zugeordneten Objektivrings entsprechen kann, in welche der Objektivring mittels des zugeordneten Objektiv-Stellmotors zu bringen ist. Sowohl für die Positionssignale als auch für die Stellsignale können somit jeweilige Wertebereiche vorgegeben sein, wobei die Zuordnungsvorschrift eine Zuordnung von Werten aus dem Wertebereich des Positionssignal zu Werten aus dem Wertebereich des Stellsignals und/oder umgekehrt definiert. Insbesondere der Wertebereich des Positionssignals, aber auch der Wertebereich des Stellsignals, kann dabei Drehstellungen von 0° bis 360° umfassen.

Indem die Zuordnungsvorschrift wenigstens einem mathematischen Funktionszusammenhang entspricht, kann eine klare, berechenbare und dadurch anpassbare Zuordnung von Positionssignalen zu jeweiligen Stellsignalen angegeben werden. Insbesondere kann die Zuordnungsvorschrift dabei einer stetigen monotonen mathematischen Funktion entsprechen, so dass ein kontinuierliches Drehen des Bedienelementes eine kontinuierliche Vergrößerung oder Verkleinerung des einzustellenden Parameters zur Folge hat und keine Sprünge in der Einstellung auftreten.

Die Ausstattung der Fernsteuereinrichtung (insbesondere der Bedieneinheit) mit einer Eingabeeinrichtung ermöglicht es einem Benutzer nun, die Zuordnungsvorschrift individuell und variabel zu konfigurieren. Beispielsweise kann ein Benutzer den mathematischen Funktionszusammenhang derart einstellen, dass die Zuordnungsvorschrift zur Zuordnung von Positionssignalen zu Stellsignalen einen linearen Zusammenhang zwischen Drehungen des Bedienelementes und der tatsächlichen Einstellung des Parameterwertes zur Folge hat. Bezogen auf eine einzustellende Fokuslage kann durch eine solche Einstellung erreicht werden, dass bei betragsgleichen Drehstellungsänderungen des Bedienelementes anstelle der üblichen 1/x-Abhängigkeit äquidistante Veränderungen der Fokuslage erfolgen, um beispielsweise zumindest in einem bestimmten Bereich kleinschrittige Anpassungen der Fokuslage zum präzisen Verfolgen eines Objektes vornehmen zu können. Gegenüber einer herkömmlichen linearen Umwandlung des Positionssignals bzw. der Drehstellung des Bedienelementes in das Stellsignal für den Objektiv-Stellmotor bzw. die Drehstellung eines Objektivrings kann entsprechend insbesondere eine 1/x-Abhängigkeit als Zuordnungsvorschrift durch Benutzereingabe konfigurierbar sein, sodass bei einer 1/x-Abhängigkeit des einzustellenden Parameters (z.B. Fokuslage) von der Drehstellung des Objektivrings eine lineare Abhängigkeit des einzustellenden Parameters von der Drehstellung des Bedienelementes relativ zu dem Basisteil erreicht werden kann.

Dazu kann die Zuordnungsvorschrift insbesondere derart konfigurierbar sein, dass äquidistante Drehstellungen des Bedienelementes einen 1/x-Zusammenhang oder generell einen nicht-linearen Zusammenhang zu den Drehstellungen eines einzustellenden Objektivrings aufweisen. Sofern das Kameraobjektiv also eine 1/x-Abhängigkeit oder sonstige nicht-lineare Abhängigkeit des einzustellenden Parameters von der Drehstellung des Objektivrings besitzt, kann diese nicht-lineare Abhängigkeit somit wahlweise in der Fernsteuereinrichtung als Zuordnungsvorschrift eingestellt werden, so dass betragsgleiche Drehstellungsänderungen des Bedienelementes äquidistante Veränderungen des Kameraobjektiv-Parameters bewirken.

Insbesondere kann der mathematische Funktionszusammenhang für jeweilige Abschnitte bzw. Wertebereiche flexibel anpassbar sein, so dass beispielsweise zwischen einer ersten Drehstellung und einer zweiten Drehstellung des Bedienelementes ein linearer Zusammenhang einer jeweiligen Drehstellungsänderung zu dem einzustellenden Kameraobjektiv-Parameter, beispielsweise einer Fokuslage oder einer Brennweite, gewählt werden kann. Außerhalb des Bereichs zwischen der ersten Drehstellung und der zweiten Drehstellung kann hingegen die herkömmliche 1/x-Abhängigkeit beibehalten werden. Insbesondere kann ein Benutzer dabei zur Konfiguration der Zuordnungsvorschrift jeweilige zu der ersten Drehstellung und zu der zweiten Drehstellung des Bedienelementes zuzuordnende Stellsignale einstellen und einen linearen Zusammenhang zwischen den Drehstellungen des Bedienelementes und dem einzustellenden Parameter auswählen. Die Auswerte- und Steuereinrichtung oder die Eingabeeinrichtung kann dazu ausgebildet sein kann, die Zuordnungsvorschrift für den gewählten Wertebereich anhand der eingegebenen Wertepaare und des gewählten Funktionszusammenhangs zu bestimmen. Ferner kann die Auswerte- und Steuereinrichtung oder die Eingabeeinrichtung dazu ausgebildet sein, die Zuordnungsvorschrift außerhalb des gewählten Wertebereichs derart zu bestimmen, dass die Zuordnungsvorschrift insgesamt einer monotonen stetigen mathematischen Funktion entspricht, die in einem solchen Fall abschnittsweise zu definieren ist. Dazu kann beispielsweise die Steigung und ein Offset einer außerhalb des gewählten Wertebereichs vorgesehenen linearen Zuordnung von Stellsignalen zu Positionssignalen an die eingestellten Wertepaare angepasst werden.

Beispielsweise kann durch eine solche bereichsweise Einstellung der Zuordnungsvorschrift erreicht werden, dass eine kontinuierliche und einfach auszuführende Drehung des Bedienelementes eine zuvor festgelegte, nicht kontinuierliche Einstellung eines Parameters, insbesondere einer Fokuslage, zur Folge hat. So kann beispielsweise durch kontinuierliches Drehen des Bedienelementes zunächst anhand der herkömmlichen 1/x-Abhängigkeit eine verhältnismäßig starke Vergrößerung der Fokuslage erfolgen, daraufhin eine wunschgemäße langsame Veränderung zwischen der gewählten ersten Drehstellung und der gewählten zweiten Drehstellung, woraufhin für weitere Drehstellungen wiederum eine stärkere Vergrößerung der Fokuslage anhand der herkömmlichen 1/x-Abhängigkeit erfolgen kann.

Um den mathematischen Funktionszusammenhang konfigurieren zu können, kann insbesondere vorgesehen sein, dass die Fernsteuereinrichtung in einen Konfigurationsmodus bringbar ist, in welchem die Zuordnungsvorschrift mittels der Eingabeeinrichtung konfigurierbar ist. Beispielsweise kann die Bedieneinheit dazu zumindest eine Taste, einen Schieberegler oder eine berührungsempfindliche Anzeigeeinrichtung (Touchscreen) aufweisen, um den Konfigurationsmodus auswählen und Einstellungen vornehmen zu können. In einem solchen Konfigurationsmodus können beispielsweise mittels einer Anzeigeeinrichtung Einstellmöglichkeiten für den mathematischen Funktionszusammenhang angezeigt werden, die der Benutzer durch Betätigung von Tasten, Schiebereglern und/oder einer berührungsempfindlich ausgebildeten Anzeigeeinrichtung auswählen kann. Insbesondere kann es dabei vorgesehen sein, dass ein Benutzer wenigstens einen Startwert und den Befehl zum Erstellen einer derartigen Zuordnungsvorschrift, dass für Drehstellungen ab diesem Startwert ein linearer Zusammenhang zwischen der Drehstellung des Bedienelementes und dem jeweiligen einzustellenden Parameter erzeugt wird, eingeben kann. Zusätzlich kann beispielsweise ein Endwert bzw. diejenige Drehstellung gewählt werden, bis zu welcher der lineare Zusammenhang bestehen soll. Alternativ dazu kann der lineare Zusammenhang zwischen der Drehstellung und dem einzustellenden Parameter der Bewegtbildkamera bei einer ausschließlichen Eingabe des Startwertes automatisch bis zu der maximalen Drehstellung des Bedienelementes, insbesondere 360°, festgelegt und die Zuordnungsvorschrift zur Zuordnung von Stellsignalen zu Positionssignalen entsprechend bestimmt werden.

Grundsätzlich bedingt die beschriebene Konfiguration der Zuordnungsvorschrift zur Zuordnung von Positionssignalen zu Stellsignalen mittels der Eingabeeinrichtung nicht, dass ein Benutzer unmittelbar bzw. direkt Anpassungen dieser Zuordnungsvorschrift vornimmt. Vielmehr kann es vorgesehen sein, dass einem Benutzer in dem Konfigurationsmodus Möglichkeiten zur Anpassung der Zuordnung von Drehstellungen des Bedienelementes zu jeweiligen Werten des einzustellenden Parameters der Kamera angezeigt werden. Durch die Auswahl und Konfiguration dieser Zuordnung von Drehstellungen zu Parameterwerten kann der Benutzer jedoch mittelbar auch die Zuordnungsvorschrift zur Zuordnung von Stellsignalen zu Positionssignalen konfigurieren, wobei die Anpassung oder Berechnung des tatsächlichen mathematischen Funktionszusammenhangs mittels der Eingabeeinrichtung oder der Auswerte- und Steuereinrichtung erfolgen kann. Dies kann einem Benutzer eine einfache und intuitive Anpassung der Zuordnungsvorschrift ermöglichen, ohne dass dieser die Details der innerhalb der Fernsteuereinrichtung ablaufenden Prozesse kennen und anpassen muss.

Verschiedene Ausführungsformen sind den abhängigen Ansprüchen, der Beschreibung und den Zeichnungen zu entnehmen.

Grundsätzlich kann dabei der vorstehend beschriebene Konfigurationsmodus der Fernsteuereinrichtung dazu vorgesehen sein, die zu den verschiedenen Ausführungsformen beschriebenen Einstellungen vorzunehmen.

Bei einigen Ausführungsformen kann über die Eingabeeinrichtung für wenigstens einen Wertebereich der Positionssignale oder für wenigstens einen Wertebereich der Stellsignale ein einer 1/x-Funktion entsprechender Zusammenhang und/oder ein sonstiger nicht-linearer Zusammenhang zwischen Werten des Positionssignals des Positionsgebers und zugeordneten Werten des Stellsignals für den Objektiv-Stellmotor einstellbar sein. Durch ein Einstellen eines solchen 1/x-Zusammenhangs zwischen dem Positionssignal und dem Stellsignal in einem bestimmten Wertebereich kann insbesondere ein linearer Zusammenhang zwischen dem Positionssignal bzw. der durch dieses repräsentierten Drehstellung des Bedienelementes relativ zu dem Basisteil einerseits und dem tatsächlichen Wert des eingestellten Parameters der Bewegtbildkamera bzw. des Kameraobjektivs andererseits erreicht werden, auch wenn, wie herkömmlich, ein 1/x-Zusammenhang zwischen der Drehstellung eines jeweiligen Objektivrings und dem Parameterwert besteht. Auch die Einstellung eines sonstigen, nicht-linearen Zusammenhangs zwischen Werten des Positionssignals und zugeordneten Werten des Stellsignals kann eine wunschgemäße Anpassung der Zuordnungsvorschrift und insbesondere einen linearen Zusammenhang zwischen Drehstellungen des Bedienelementes und Werten des Parameters ermöglichen, sofern zwischen dem Parameterwert und den Stellsignalen ein von einer 1/x-Abhängigkeit verschiedener Zusammenhang besteht.

Dabei kann ein Wertebereich der Positionssignale, insbesondere eine erste und eine zweite Drehstellung des Bedienelementes, wählbar sein, für welchen der gewählte Zusammenhang gelten soll. Ferner kann eine solche Einstellung auch durch eine Wahl eines Wertebereichs der Stellsignale erfolgen, die beispielsweise auf einer Anzeigeeinrichtung indirekt bzw. mittelbar durch einen Wertebereich des einzustellenden Parameters dargestellt werden können. Dadurch kann beispielsweise auf einfache Weise ein Bereich von Fokuslagen festlegt werden, für welchen eine lineare Veränderung der Fokuslage bei einer Drehung des Bedienelementes erfolgen soll. Alternativ dazu kann der gewählte Funktionszusammenhang auch für den gesamten Wertebereich der Positionssignale und der Stellsignale einstellbar sein, so dass ausschließlich eine Wahl des Funktionszusammenhangs erfolgt.

Über die Eingabeeinrichtung kann bei einigen Ausführungsformen ein Startwert des wenigstens einen Wertebereichs der Positionssignale oder des wenigstens einen Wertebereichs der Stellsignale einstellbar sein. Alternativ oder zusätzlich kann über die Eingabeeinrichtung ein Endwert des wenigstens einen Wertebereichs der Positionssignale oder des wenigstens einen Wertebereichs der Stellsignale einstellbar sein. Der Benutzer kann somit den Wertebereich, in welchem ein von einer herkömmlichen Zuordnungsvorschrift abweichender mathematischer Funktionszusammenhang eingestellt werden soll, konfigurieren und die jeweilige mathematische Funktion für diesen Wertebereich festlegen.

Bei einigen Ausführungsformen können über die Eingabeeinrichtung für verschiedene Wertebereiche des Positionssignals oder für verschiedene Wertebereiche der Stellsignale unterschiedliche mathematische Funktionszusammenhänge durch Benutzereingabe einstellbar sein.

Beispielsweise können für zwei verschiedene Wertebereichen der Positionssignale 1/x-Funktionen entsprechende Zusammenhänge zwischen dem Positionssignal und dem Stellsignal eingestellt werden, um für Drehstellungen des Bedienelementes in den jeweiligen Wertebereichen einen linearen Zusammenhang zwischen der Drehstellung und dem angepassten Parameter der Bewegtbildkamera zu erhalten. Zwischen diesen Wertebereichen kann beispielsweise ein herkömmlicher 1/x-Zusammenhang fortbestehen. Ferner können die Grenzen der Wertebereiche beispielsweise als Paare von Positionssignalen und zuzuordnenden Stellsignalen eingegeben werden und ein für diesen Wertebereich gewünschter Funktionszusammenhang einstellbar sein, wobei die Eingabeeinrichtung oder die Auswerte- und Steuereinrichtung dazu ausgebildet sein kann, die aus dieser Eingabe folgende Steigung des eingestellten mathematischen Funktionszusammenhangs zu bestimmen und die Zuordnungsvorschrift zu erstellen. Ferner kann die Eingabeeinrichtung oder die Auswerte- und Steuereinrichtung dazu ausgebildet sein, die Zuordnungsvorschrift zwischen zwei individuell konfigurierten Wertebereichen derart zu bestimmen, dass die Zuordnungsvorschrift über den gesamten Wertebereich der Positionssignale einer stetigen monotonen mathematischen Funktion entspricht.

Die Zuordnungsvorschrift kann bei einigen Ausführungsformen einer stetigen monotonen mathematischen Funktion mit zumindest einem Parameter entsprechen, wobei der Parameter mittels der Eingabeeinrichtung einstellbar ist. Eine derartig konfigurierbare Zuordnungsvorschrift kann eine besonders einfache Einstellmöglichkeit für den Benutzer bieten.

Bei einigen Ausführungsformen kann mittels der Eingabeeinrichtung wenigstens einer der folgenden mathematischen Funktionszusammenhänge für die Zuordnungsvorschrift einstellbar sein: eine Potenzfunktion, eine lineare Funktion, eine Polynomfunktion, eine gebrochenrationale Funktion, eine exponentielle Funktion und/oder eine logarithmische Funktion. Die einstellbaren Funktionen können in einem Konfigurationsmodus der Fernsteuereinrichtung insbesondere mittels einer Anzeigeeinrichtung angezeigt werden, wobei ein Benutzer beispielsweise durch Betätigen von Tasten der Fernsteuereinrichtung oder einer berührungsempfindlichen Anzeigeeinrichtung zwischen den zur Verfügung stehenden Funktionen auswählen kann. Wiederum kann eine indirekte Darstellung der Zuordnungsvorschrift zur Zuordnung von Positionssignalen zu Stellsignalen durch eine Anzeige des resultierenden Zusammenhangs zwischen Drehstellungen des Bedienelementes und eingestellten Werten des Parameters der Bewegtbildkamera vorgesehen sein.

Ferner kann bei einigen Ausführungsformen mittels der Eingabeeinrichtung auch ein Wertebereich der Positionssignale oder ein Wertebereich der Stellsignale für die Anwendung des ausgewählten mathematischen Funktionszusammenhangs einstellbar sein. Dies kann eine flexible Einstellung bzw. Konfiguration der Zuordnungsvorschrift ermöglichen, wobei für beliebige Wertebereiche der Positionssignale oder der Stellsignale, insbesondere für beliebige Bereiche von Drehstellungen des Bedienelementes, jeweilige und gegebenenfalls voneinander verschiedene Funktionszusammenhänge einstellbar sind.

Bei einigen Ausführungsformen können über die Eingabeeinrichtung ein minimaler Wert des Stellsignals und/oder ein maximaler Wert des Stellsignals durch Benutzereingabe kontinuierlich oder quasikontinuierlich - und somit sehr flexibel - veränderbar sein. Auch die Wertebereichsgrenzen des Stellsignals für den Objektiv-Stellmotor können dadurch variabel festlegbar sein, ohne dass ein Benutzer beispielsweise auf eine Auswahl aus lediglich wenigen vorbestimmten Werten begrenzt ist. Die Eingabeeinrichtung und/oder die Auswerte- und Steuereinrichtung kann dabei dazu ausgebildet sein, einen von dem Benutzer eingestellten oder einen voreingestellten mathematischen Funktionszusammenhang derart anzupassen, dass der gewählte minimale und/oder maximale Wert des Stellsignals einem minimalen und/oder maximalen Wert des Positionssignals bzw. einer minimalen und/oder maximalen Stellung des Bedienelementes zugeordnet wird. Ein Parameterbereich, der von einer jeweiligen Bewegtbildkamera bzw. deren Objektiv bereitgestellt wird, kann somit flexibel und an die jeweilige Aufnahme angepasst begrenzt werden. Wiederum können die Wertebereichsgrenzen des Stellsignals indirekt über die jeweiligen, daraus folgenden Grenzen des einzustellenden Parameters der Bewegtbildkamera angezeigt und ausgewählt werden.

Insbesondere durch die Möglichkeit, einen minimalen Wert des Stellsignals kontinuierlich oder quasikontinuierlich anpassen zu können, kann die Zuordnungsvorschrift auf einfache Weise derart konfiguriert werden, dass beispielsweise ein beliebiger Nahbereich eines Objektivs ausgeschlossen werden kann. Die Auswerte- und Steuereinrichtung oder die Eingabeeinrichtung kann dabei dazu ausgebildet sein, einen gewählten mathematischen Funktionszusammenhang oder eine voreingestellte, insbesondere lineare Zuordnungsvorschrift zur Zuordnung von Stellsignalen zu Positionssignalen automatisch an den gewählten minimalen Wert des Stellsignals anzupassen. Im Falle eines herkömmlichen linearen Mappings bzw. einer linearen Zuordnungsvorschrift zur Zuordnung von Stellsignalen zu Positionssignalen kann durch die Wahl eines minimalen Stellsignals insbesondere eine Stauchung oder Streckung der Zuordnung von eingestellten Parameterwerten zu Drehstellungen des Bedienelementes erreicht werden. Diese Stauchung oder Streckung sowie der auszuschließende Nahbereich können durch eine kontinuierliche oder quasikontinuierliche Veränderung des minimalen Stellsignals beliebig eingestellt werden, sodass ein Benutzer nicht mehr beispielsweise durch die Anzahl gespeicherter Kennzeichnungsringe in einer derartigen Einstellung beschränkt ist.

Bei einigen Ausführungsformen kann mittels der Eingabeeinrichtung für mehrere verschiedene Drehstellungen des Bedienelements ein jeweiliges gewünschtes Stellsignal eingebbar sein, so dass mehrere Paare von Positionssignalen und gewünschten Stellsignalen festgelegt sind, wobei die Auswerte- und Steuereinrichtung dazu ausgebildet sein kann, die Zuordnungsvorschrift gemäß den festgelegten Paaren von Positionssignalen und gewünschten Stellsignalen zu ermitteln. Beispielsweise kann die Auswerte- und Steuereinrichtung dazu ausgebildet sein, durch lineare Interpolation zwischen den Wertepaaren oder Fitten eines Polynoms die Zuordnungsvorschrift zu bestimmen. Hierdurch können auch komplexe Zuordnungsvorschriften bzw. Funktionsverläufe auf einfache Weise durch Benutzereingabe festgelegt werden.

Die Auswerte- und Steuereinrichtung kann bei einigen Ausführungsformen dazu ausgebildet sein, aus Werten und/oder Parametern, die über die Eingabeeinrichtung eingegeben werden, die Zuordnungsvorschrift durch Regression oder Interpolation zu ermitteln. Beispielsweise können dabei in einem Konfigurationsmodus der Fernsteuereinrichtung durch einen Benutzer Wertepaare von Positionssignalen und Stellsignalen sowie für jeweilige Wertebereiche vorgesehene mathematische Funktionen wähl- bzw. einstellbar sein, wobei die Auswerte- und Steuereinrichtung zum Bestimmen der Zuordnungsvorschrift anhand dieser Angaben ausgebildet sein kann.

Die Auswerte- und Steuereinrichtung kann dazu ausgebildet sein, die Stellsignale für den Objektiv-Stellmotor durch Berechnung oder durch Nachschlagen in einer Nachschlagetabelle in Abhängigkeit von den Positionssignalen zu ermitteln. Die Auswerte- und Steuereinrichtung kann folglich dazu ausgebildet sein, die jeweiligen Positionssignalen zugeordneten Stellsignale direkt anhand des mathematischen Funktionszusammenhangs zu berechnen oder in einer Nachschlagetabelle (Look-up Table, LUT) nachzuschlagen, die entsprechend dem mathematischen Funktionszusammenhang angelegt ist. Dabei kann es vorgesehen sein, dass eine derartige Nachschlagetabelle lediglich auf dem mathematischen Funktionszusammenhang basierende Stützwerte bereitstellt und die Auswerte- und Steuereinrichtung dazu ausgebildet ist, Zwischenwerte durch Interpolation oder Regression zu ermitteln.

Bei einigen Ausführungsformen kann die Fernsteuereinrichtung einen Speicher zum Speichern der Zuordnungsvorschrift aufweisen. Dabei kann ein solcher Speicher zum dauerhaften Speichern der Zuordnungsvorschrift vorgesehen sein, so dass die Zuordnungsvorschrift beispielsweise bei einer erneuten Verwendung der Fernsteuereinrichtung automatisch wieder aufgerufen werden kann. Alternativ dazu kann der Speicher zum temporären Speichern der Zuordnungsvorschrift als Arbeitsspeicher der Auswerte- und Steuereinrichtung vorgesehen sein. Der Speicher kann an der Bedieneinheit oder - bei einem modularen Aufbau der Fernsteuereinrichtung - an einer hiervon separaten Einheit vorgesehen sein, insbesondere an der Bewegtbildkamera.

Die Eingabeeinrichtung der Fernsteuereinrichtung kann bei sämtlichen Ausführungsformen in die Bedieneinheit integriert sein oder - bei einem modularen Aufbau der Fernsteuereinrichtung - an einer hiervon separaten Einheit vorgesehen sein, insbesondere an der Bewegtbildkamera.

Die Eingabeeinrichtung der Fernsteuereinrichtung kann bei sämtlichen Ausführungsformen wenigstens eine der folgenden Komponenten umfassen: das drehbare Bedienelement der Bedieneinheit; den Positionsgeber; wenigstens eine Taste der Bedieneinheit oder der Bewegtbildkamera; eine Anzeigeeinrichtung der Bedieneinheit oder der Bewegtbildkamera; und/oder eine berührungsempfindliche Anzeigeeinrichtung der Bedieneinheit oder der Bewegtbildkamera.

Beispielsweise kann das Bedienelement der Bedieneinheit in einem Konfigurationsmodus der Fernsteuereinrichtung dazu dienen, durch Drehen die jeweiligen Einstellungen für den mathematischen Funktionszusammenhang auszuwählen. Dabei kann die Eingabeeinrichtung auch den Positionsgeber umfassen, um die Drehstellung des Bedienelementes im Konfigurationsmodus erfassen und jeweiligen Einstellungen des mathematischen Funktionszusammenhangs zuordnen zu können. Ferner kann die Fernsteuereinrichtung, insbesondere die Bedieneinheit, wenigstens eine Taste aufweisen, mittels derer Einstellungen vornehmbar sind. Insbesondere kann die Fernsteuereinrichtung, insbesondere die Bedieneinheit, eine Anzeigeeinrichtung aufweisen, um einem Benutzer die Konfigurationsmöglichen des mathematischen Funktionszusammenhangs im Konfigurationsmodus anzuzeigen. Eine berührungsempfindliche Anzeigeeinrichtung, insbesondere ein Touchscreen, kann es dabei ermöglichen, direkt und komfortabel Einstellungen vorzunehmen. Auch kann die Auswerte- und Steuereinrichtung einen Teil der Eingabeeinrichtung bilden und beispielsweise dazu ausgebildet sein, die Zuordnungsvorschrift anhand von eingegebenen Werten oder einer von einem Benutzer getroffenen Auswahl zu bestimmen und die Konfiguration der Zuordnungsvorschrift dadurch abzuschließen.

Bei einigen Ausführungsformen kann die Eingabeeinrichtung einen Funkempfänger zum Empfangen einer individuellen Zuordnungsvorschrift von einem mobilen Kommunikationsgerät eines Benutzers umfassen. Dies kann eine flexible Konfigurierung der Zuordnungsvorschrift in einer Anwendung (App) eines mobilen Kommunikationsgerätes, insbesondere einem Mobilfunkgerät, sowie deren drahtlose Übermittlung an die Fernsteuereinrichtung ermöglichen. Auch eine Konfiguration an einem PC oder Laptop kann vorgesehen sein, wobei die drahtlose Übertragung der Zuordnungsvorschrift beispielsweise über eine Bluetooth- oder Wifi-Verbindung erfolgen kann.

Die Fernsteuereinrichtung gemäß den vorstehend und auch den nachfolgend genannten Ausführungsformen und weiteren Erfindungsaspekten kann eine elektronische Anzeigeeinrichtung aufweisen, an der Parameterwerte (z.B. Fokuswerte) dargestellt werden können, die den mittels des Bedienelements eingestellten oder einzustellenden Steuerbefehlen für den Objektiv-Stellmotor entsprechen. Bei den dargestellten Parameterwerten kann es sich um Soll-Werte und/oder Ist-Werte handeln. Die Parameterwerte können als Zahlenwerte und/oder graphisch dargestellt sein. Die elektronische Darstellung kann auch zusätzliche Informationen umfassen, wie zum Beispiel eine Schärfentiefe. Die Darstellung der Parameterwerte kann in Abhängigkeit von der Drehstellung des Bedienelementes relativ zu dem Basisteil veränderlich sein und insbesondere kontinuierlich angepasst werden. Die elektronische Anzeigeeinrichtung kann insbesondere an dem Basisteil der Fernsteuereinrichtung angeordnet sein.

Bei einigen Ausführungsformen kann die Fernsteuereinrichtung einen Kennzeichnungsring umfassen, welcher drehfest mit dem Bedienelement der Bedieneinheit koppelbar ist und welcher dazu vorgesehen ist, die einstellbaren Steuerbefehle zu kennzeichnen, wobei die Eingabeeinrichtung der Fernsteuereinrichtung dazu ausgebildet sein kann, eine gewünschte Zuordnungsvorschrift aus einem Speicher des gekoppelten Kennzeichnungsrings auszulesen und an die Auswerte- und Steuereinrichtung zu übermitteln. Dies ermöglicht es, die auf dem Kennzeichnungsring angezeigte Zuordnungsvorschrift unmittelbar und ohne weitere Einstellungen des Benutzers bei einer Betätigung des Bedienelementes anzuwenden. Die Eingabeeinrichtung kann hierfür eine insbesondere an der Bedieneinheit vorgesehene Leseeinrichtung für den Speicher des gekoppelten Kennzeichnungsrings aufweisen.

Bei einigen Ausführungsformen kann die Bedieneinheit eine Schreibeinrichtung umfassen, welche dazu ausgebildet ist, eine in der Fernsteuereinrichtung gespeicherte Zuordnungsvorschrift in den Speicher des gekoppelten Kennzeichnungsrings zu schreiben. Für dieses Schreiben der Zuordnungsvorschrift in den Speicher des gekoppelten Kennzeichnungsrings genügt die Übertragung einer Kodierung, welche die Zuordnungsvorschrift repräsentiert, beispielsweise aufgrund einer Parametrierung. Insbesondere kann die Schreibeinrichtung der Bedieneinheit gemeinsam mit der Eingabeeinrichtung eine Schreib-/Leseeinrichtung bilden, um den Speicher des Kennzeichnungsrings sowohl auslesen als auch beschreiben zu können. Eine durch Benutzereingabe konfigurierte Zuordnungsvorschrift kann dadurch auf einfache Weise in den Speicher des gekoppelten Kennzeichnungsrings geschrieben werden. Eine individuell erstellte Zuordnungsvorschrift kann somit auch auf eine andere Fernsteuereinrichtung übertragen werden, nämlich indem der Kennzeichnungsring mit der Bedieneinheit der anderen Fernsteuereinrichtung gekoppelt wird und die in den Speicher des Kennzeichnungsrings geschriebene Zuordnungsvorschrift von der anderen Fernsteuereinrichtung eingelesen wird.

Die sich aus der jeweiligen Zuordnungsvorschrift ergebende Zuordnung von Positionssignalen bzw. Drehstellung des Bedienelementes zu Steuerbefehlen bzw. Werten des einzustellenden Parameters kann auf dem Kennzeichnungsring anbringbar, insbesondere aufdruckbar und/oder aufklebbar, sein. Eine individuell konfigurierte Zuordnungsvorschrift kann somit dauerhaft in dem Speicher eines gekoppelten Kennzeichnungsrings gespeichert und der Kennzeichnungsring entsprechend gekennzeichnet werden. Die individuell konfigurierte Zuordnungsvorschrift kann bei einem Koppeln des Kennzeichnungsrings mit dem drehbaren Bedienelement der Bedieneinheit automatisch durch die Eingabeeinrichtung ausgelesen und an die Auswerte- und Steuereinrichtung übermittelt werden, sodass diese Zuordnungsvorschrift unmittelbar angewandt werden kann. Eine individuell konfigurierte Zuordnungsvorschrift kann dadurch klar gekennzeichnet durch den Kennzeichnungsring dauerhaft und wiederholt verwendet werden, ohne dass eine erneute Konfiguration erforderlich ist. Darüber hinaus ist es möglich, individuelle Zuordnungsvorschriften bei verschiedenen Fernsteuereinrichtungen, insbesondere auch bei Leihgeräten, unmittelbar durch Koppeln des die konfigurierte Zuordnungsvorschrift speichernden Kennzeichnungsrings anwenden zu können.

Bei einigen Ausführungsformen kann die Auswerte- und Steuereinrichtung in die Bedieneinheit der Fernsteuereinrichtung (insbesondere in das Basisteil) integriert sein. Die Ermittlung der Stellsignale für den Objektiv-Stellmotor in Abhängigkeit von den Positionssignalen des Positionsgebers gemäß der Zuordnungsvorschrift erfolgt somit in der Bedieneinheit. Die Bedieneinheit kann bei derartigen Ausführungsformen eine Ausgabeeinrichtung aufweisen, die dazu ausgebildet ist, die Stellsignale für den Objektiv-Stellmotor direkt oder indirekt an den oder die Objektiv-Stellmotor(en) zu übermitteln, insbesondere drahtlos oder drahtgebunden. Die Stellsignale können an eine Empfangseinrichtung der Bewegtbildkamera übermittelt werden, die insbesondere in oder an dem Kamerakörper oder in oder an einer Objektivring-Antriebseinheit der Bewegtbildkamera vorgesehen sein kann. Eine derartige Objektivring-Antriebseinheit kann einen oder mehrere Objektiv-Stellmotor(en) umfassen und mit dem Kamerakörper der Bewegtbildkamera mechanisch und/oder signaltechnisch verbunden sein.

Bei einigen Ausführungsformen - mit einem modularen Aufbau der Fernsteuereinrichtung - kann die Auswerte- und Steuereinrichtung hingegen separat von der Bedieneinheit ausgebildet sein. Die für die Ermittlung der Stellsignale vorgesehene Auswerte- und Steuereinrichtung kann in eine separate Einheit integriert sein. Bei der separaten Einheit kann es sich um die zugeordnete Bewegtbildkamera handeln, wobei die Auswerte- und Steuereinrichtung der Fernsteuereinrichtung insbesondere in oder an dem Kamerakörper oder in oder an einer Objektivring-Antriebseinheit der Bewegtbildkamera vorgesehen sein kann. Eine derartige Objektivring-Antriebseinheit kann einen oder mehrere Objektiv-Stellmotor(en) umfassen und mit dem Kamerakörper der Bewegtbildkamera mechanisch und/oder signaltechnisch verbunden sein. Die Auswerte- und Steuereinrichtung der Fernsteuereinrichtung kann auch Teil einer übergeordneten Steuereinheit der Bewegtbildkamera sein. Die Bedieneinheit kann bei derartigen Ausführungsformen eine Ausgabeeinrichtung aufweisen, die dazu ausgebildet ist, die Positionssignale des Positionsgebers (unmittelbar oder in weiter verarbeiteter Form) an die Auswerte- und Steuereinrichtung zu übermitteln. Die Übermittlung der Positionssignale des Positionsgebers an die Auswerte- und Steuereinrichtung kann drahtlos oder drahtgebunden erfolgen. Die Auswerte- und Steuereinrichtung kann wiederum dazu ausgebildet sein, die ermittelten Stellsignale direkt oder indirekt an den oder die Objektiv-Stellmotor(en) zu übermitteln, wobei dies drahtlos oder drahtgebunden erfolgen kann.

Es kann auch auf ein Kamerasystem umfassend eine Bewegtbildkamera und eine Fernsteuereinrichtung der genannten Art vorgesehen sein, wobei die Auswerte- und Steuereinrichtung in die Bewegtbildkamera integriert ist. Eine derartige Bewegtbildkamera kann, wie eingangs erwähnt, ein integriertes optisches System oder einen Objektivanschluss für ein Wechselobjektiv, ferner einen elektronischen Bildsensor zum Erzeugen von Bildsignalen aus einfallendem Licht und eine Bildsignalverarbeitungseinrichtung zum Umwandeln der Bildsignale in einen digitalen Bilddatenstrom umfassen.

Das Stellsignal für den Objektiv-Stellmotor kann generell einen einzustellenden Wert für eine Fokuslage, eine Irisblendenöffnung oder eine Brennweite eines Objektivs der Bewegtbildkamera repräsentieren.

Auch die Verwendung einer Fernsteuereinrichtung der genannten Art kann vorgesehen sein, um einen mathematischen Funktionszusammenhang einer Zuordnungsvorschrift, welche einer Zuordnung von Positionssignalen eines Positionsgebers einer Bedieneinheit zu Stellsignalen eines Objektiv-Stellmotors entspricht, in der erläuterten Weise durch Benutzereingabe zu konfigurieren.

Die genannte Aufgabe wird gemäß der Erfindung durch eine Fernsteuereinrichtung für einen Objektiv-Stellmotor einer Bewegtbildkamera gelöst, die insbesondere nach einem der vorstehend beschriebenen Ausführungsbeispiele ausgebildet sein kann, mit einer Bedieneinheit, die ein Basisteil, ein relativ zu dem Basisteil um eine Drehachse drehbares Bedienelement zum Einstellen von Steuerbefehlen für den Objektiv-Stellmotor, und einen Positionsgeber aufweist, welcher dazu ausgebildet ist, eine jeweilige Drehstellung des Bedienelementes relativ zu dem Basisteil zu erfassen und entsprechende Positionssignale zu erzeugen, wobei das Bedienelement dazu ausgebildet ist, einen Kennzeichnungsring zum Kennzeichnen der einstellbaren Steuerbefehle in drehfester Kopplung aufzunehmen, wobei die Bedieneinheit der Fernsteuereinrichtung eine Leseeinrichtung aufweist, die dazu ausgebildet ist, eine an einem gekoppelten Kennzeichnungsring vorgesehene Kodierung auszulesen.

Generell kann die Fernsteuereinrichtung, und insbesondere die Bedieneinheit, auch eine Auswerte- und Steuereinrichtung aufweisen, welche dazu ausgebildet ist, gemäß einer Zuordnungsvorschrift in Abhängigkeit von den Positionssignalen die Stellsignale für den Objektiv-Stellmotor zu ermitteln.

Indem das Bedienelement dazu ausgebildet ist, einen Kennzeichnungsring aufzunehmen, können einem Benutzer die eingestellten Steuerbefehle bzw. die eingestellten Werte des zugeordneten Parameters der Bewegtbildkamera angezeigt werden, wenn das Bedienelement in eine jeweilige Drehstellung gebracht ist. Insbesondere kann der Kennzeichnungsring an seiner Mantelfläche entsprechende Markierungen tragen (z.B. Zahlenwerte und/oder Skalenstriche).

Durch die Ausbildung der Fernsteuereinrichtung mit einer Leseeinrichtung zum Auslesen einer Kodierung des Kennzeichnungsrings kann der Kennzeichnungsring zugleich als erweiterter Informationsträger genutzt werden, um an die gekoppelte Bedieneinheit einen Betriebsdatensatz zu übertragen, beispielsweise eine Information über eine erwünschte oder eingestellte Betriebsart. Dieser Betriebsdatensatz kann sich auf die Fernsteuereinrichtung, und/oder auf die zugeordnete Bewegtbildkamera, und/oder auf das zugeordnete Kameraobjektiv beziehen. Auf diese Weise kann eine automatische Erfassung des Betriebsdatensatzes (z.B. Betriebsart) aufgrund des ohnehin verwendeten Kennzeichnungsrings bewirkt werden. Somit braucht der Benutzer die/den jeweilige(n) Betriebsart und/oder Betriebsdatensatz nicht händisch an der Bedieneinheit einzugeben, sondern kann dies durch einfaches Koppeln des Kennzeichnungsrings mit der Bedieneinheit bewirken. Hierdurch wird auch erreicht, dass ein entsprechendes Einstellen der/des jeweilige(n) Betriebsart und/oder Betriebsdatensatzes nicht vergessen wird. Da ein Kennzeichnungsring hinsichtlich seiner Kennzeichnung typischerweise auf ein bestimmtes Objektiv abgestimmt ist, kann die jeweilige Kodierung des Kennzeichnungsrings sich insbesondere auf ein zugeordnetes Objektiv beziehen (z.B. Zuordnungsvorschrift oder "Lens File", wie nachstehend noch erläutert).

Bei einigen Ausführungsformen kann die Leseeinrichtung der Bedieneinheit dazu ausgebildet ist, die Kodierung des Kennzeichnungsrings durch elektrische Kontaktierung, durch magnetische Kopplung, durch elektromagnetische Signalübertragung oder durch elektromechanische Umsetzung auszulesen. Insbesondere kann im Falle einer elektrischen Kontaktierung eine elektrische Signalübertragung oder eine Widerstandsmessung vorgesehen sein. Dabei kann ein gemessener Wert des elektrischen Widerstands beispielsweise einem jeweiligen Kennzeichnungsring zugeordnet werden, so dass die Auswerte- und Steuereinrichtung die dem erfassten Kennzeichnungsring zugeordnete Zuordnungsvorschrift aus einem Speicher auslesen kann. Im Falle einer elektrischen Signalübertragung kann eine größere Anzahl von Werten kodiert werden. Eine magnetische Kopplung oder eine elektromagnetische Signalübertragung kann auch kontaktlos erfolgen (insbesondere durch Übertragung eines Funksignals, beispielsweise nach einem Protokoll gemäß "Near Field Communication", NFC). Eine elektromechanische Umsetzung kann ein Abtasten einer von mehreren vorbestimmten Formen umfassen, die unterschiedliche elektrische Signale der Abtasteinrichtung bewirken.

Bei einigen Ausführungsformen kann die Fernsteuereinrichtung, insbesondere analog wie bereits erläutert, eine Schreibeinrichtung umfassen, welche dazu ausgebildet ist, eine in der Fernsteuereinrichtung gespeicherte Kodierung (z.B. Zuordnungsvorschrift oder "Lens File") an einen gekoppelten Kennzeichnungsring zu übermitteln. Insbesondere kann die Schreibeinrichtung zusammen mit der Leseeinrichtung eine Schreib-/Leseeinrichtung bilden. Der Kennzeichnungsring kann somit als beschreibbares Speichermedium genutzt werden.

Das drehbare Bedienelement der Bedieneinheit kann eine Koppeleinrichtung aufweisen, durch welche der Kennzeichnungsring drehfest mit dem Bedienelement koppelbar ist, insbesondere in kraftschlüssiger und/oder formschlüssiger Weise. Ferner kann durch die Koppeleinrichtung die relative Drehstellung zwischen dem Kennzeichnungsring und dem Bedienelement festgelegt sein, so das eine Übereinstimmung zwischen den durch den Kennzeichnungsring gekennzeichneten Steuerbefehlen und der entsprechenden Drehstellung des Bedienelementes sichergestellt werden kann.

Die Fernsteuereinrichtung kann, wie bereits erläutert, eine Auswerte- und Steuereinrichtung aufweisen, welche dazu ausgebildet ist, gemäß einer Zuordnungsvorschrift in Abhängigkeit von den Positionssignalen die Stellsignale für den Objektiv-Stellmotor zu ermitteln, wobei die Auswerte- und Steuereinrichtung dazu ausgebildet ist, die Zuordnungsvorschrift anhand der von dem gekoppelten Kennzeichnungsring ausgelesenen Kodierung zu ermitteln. Durch die Ausgestaltung der Fernsteuereinrichtung mit einer Leseeinrichtung zum Auslesen einer Kodierung des Kennzeichnungsrings kann auf einfache Weise unmittelbar diejenige Zuordnungsvorschrift angewandt werden, die der Kennzeichnung des Kennzeichnungsrings entspricht. Die durch die ausgelesene Kodierung repräsentierte Zuordnungsvorschrift entspricht somit der Zuordnung von Drehstellungen des Bedienelements zu Steuerbefehlen bzw. erwünschten Parameterwerten des zugeordneten Kameraobjektivs.

Hierfür kann die Auswerte- und Steuereinrichtung der Fernsteuereinrichtung dazu ausgebildet sein, aus der ausgelesenen Kodierung die Zuordnungsvorschrift zum Zuordnen von Stellsignalen für den Objektiv-Stellmotor zu Positionssignalen bzw. Drehstellungen des Bedienelementes zu bestimmen. Ein Benutzer muss folglich nicht zunächst den jeweiligen Kennzeichnungsring bzw. eine entsprechende Zuordnungsvorschrift in einem Eingabemenü der Fernsteuereinrichtung auswählen, sondern kann unmittelbar mit der Steuerung der Bewegtbildkamera beginnen.

Ein solches Auslesen einer Kodierung, aus welcher die dem Kennzeichnungsring entsprechende Zuordnungsvorschrift automatisch ermittelt werden kann, kann eine an jeweilige Bewegtbildaufnahmen angepasste Steuerung der Bewegtbildkamera ermöglichen und die Steuerung der Fernsteuereinrichtung erleichtern und beschleunigen. Ferner können Bedienungsfehler leichter vermieden werden. Insbesondere kann dabei eine Vielzahl von Kennzeichnungsringen mit verschiedenen Zuordnungsvorschriften und auslesbaren Kodierungen genutzt werden, um eine möglichst variable Steuerung zu erreichen.

Die Kodierung kann dabei grundsätzlich die Zuordnungsvorschrift repräsentieren, widerspiegeln oder zur Identifizierung des Kennzeichnungsrings dienen. Dabei kann die Zuordnungsvorschrift bereits durch Auslesen der Kodierung unmittelbar vorliegen, während die Kodierung beispielsweise auch eine Rechenanweisung oder Nachschlageanweisung zum Nachschlagen in einer Nachschlagetabelle (look-up table, LUT) für die Auswerte- und Steuereinrichtung übermitteln kann.

Bei einigen Ausführungsformen kann die Fernsteuereinrichtung einen Speicher zum Speichern mehrerer Zuordnungsvorschriften aufweisen, wobei die Auswerte- und Steuereinrichtung dazu ausgebildet sein kann, in Abhängigkeit von der ausgelesenen Kodierung eine der gespeicherten mehreren Zuordnungsvorschriften auszuwählen. Beispielsweise kann durch die Kodierung der jeweilige gekoppelte und der Fernsteuereinrichtung bekannte Kennzeichnungsring gekennzeichnet werden, wobei die Auswerte- und Steuereinrichtung dazu ausgebildet sein kann, die dem gekoppelten Kennzeichnungsring entsprechende Zuordnungsvorschrift aus dem Speicher bzw. einer Nachschlagetabelle auszuwählen.

Ferner kann die Auswerte- und Steuereinrichtung dazu ausgebildet sein, die ausgelesene Kodierung als Zuordnungsvorschrift zu verwenden oder in eine Zuordnungsvorschrift umzuwandeln. Die Kodierung kann direkt die zu verwendende Zuordnungsvorschrift bestimmen, so dass die Leseeinrichtung durch Auslesen der Kodierung beispielsweise eine Nachschlagetabelle (Look-up table, LUT) an die Auswerte- und Steuereinrichtung übermitteln kann, in welcher die Zuordnungsvorschrift enthalten ist. Ebenso kann die Kodierung beispielsweise jeweilige Parameter beschreiben, anhand derer die Auswerte- und Steuereinrichtung die Zuordnungsvorschrift bzw. den jeweiligen mathematischen Funktionszusammenhang bestimmen bzw. berechnen kann.

Bei einigen Ausführungsformen kann die Kodierung, welche eine Zuordnungsvorschrift repräsentiert, in Form von elektrischen Signalen ausgelesen oder geschrieben werden.

Ferner kann die Fernsteuereinrichtung, analog wie bereits erläutert, eine Eingabeeinrichtung zum Verändern und/oder Konfigurieren der Zuordnungsvorschrift aufweisen. Dadurch kann die Zuordnungsvorschrift von einem Benutzer individuell, wie vorstehend beschrieben, für bestimmte Situationen angepasst und insbesondere an einen gekoppelten Kennzeichnungsring übermittelt werden, so dass bei einer späteren bzw. erneuten Verwendung dieses Kennzeichnungsrings automatisch die gewünschte Zuordnungsvorschrift von der Leseeinrichtung ausgelesen und von der Auswerte- und Steuereinrichtung ermittelt werden kann.

Bei einigen Ausführungsformen kann die Auswerte- und Steuereinrichtung in die Bedieneinheit integriert sein. Die Ermittlung der Stellsignale für den Objektiv-Stellmotor in Abhängigkeit von den Positionssignalen des Positionsgebers gemäß der Zuordnungsvorschrift erfolgt somit in der Bedieneinheit. Die Bedieneinheit kann bei derartigen Ausführungsformen eine Ausgabeeinrichtung aufweisen, um die Stellsignale für den Objektiv-Stellmotor auszugeben, wie vorstehend bereits erläutert.

Bei einigen Ausführungsformen- mit einem modularen Aufbau der Fernsteuereinrichtung - kann die Auswerte- und Steuereinrichtung hingegen separat von der Bedieneinheit ausgebildet sein. Die für die Ermittlung der Stellsignale vorgesehene Auswerte- und Steuereinrichtung kann in eine separate Einheit integriert sein, insbesondere in die zugeordnete Bewegtbildkamera, wie vorstehend bereits erläutert.

Zudem kann ein Kamerasystem umfassend eine Bewegtbildkamera und eine Fernsteuereinrichtung der erfindungsgemäßen Art vorgesehen sein, wobei die Auswerte- und Steuereinrichtung in die Bewegtbildkamera integriert ist. Eine derartige Bewegtbildkamera kann, wie eingangs erwähnt, ein integriertes optisches System oder einen Objektivanschluss für ein Wechselobjektiv, ferner einen elektronischen Bildsensor zum Erzeugen von Bildsignalen aus einfallendem Licht und eine Bildsignalverarbeitungseinrichtung zum Umwandeln der Bildsignale in einen digitalen Bilddatenstrom umfassen.

Alternativ oder zusätzlich zu der erläuterten Zuordnungsvorschrift kann die von dem Kennzeichnungsring ausgelesene Kodierung ein sogenanntes "Lens File" repräsentieren. Bei einigen Ausführungsformen kann die Bedieneinheit eine Auswerte- und Steuereinrichtung (insbesondere die bereits genannte Auswerte- und Steuereinrichtung) und eine elektronische Anzeigeeinrichtung aufweisen, wobei die Auswerte- und Steuereinrichtung dazu ausgebildet ist, an der Anzeigeeinrichtung vorbestimmte Darstellungswerte anzuzeigen, wobei die Darstellungswerte jeweiligen Einstellwerten eines zugeordneten Objektivs der Bewegtbildkamera entsprechen und durch die ausgelesene Kodierung vorbestimmt sind. Die vorbestimmten Darstellungswerte können insbesondere Markierungen entsprechen, die an einem Objektivring des zugeordneten Objektivs angebracht sind (z.B. eingraviert). Der Benutzer kann somit die ihm von dem jeweiligen Objektivring bekannten Darstellungswerte und deren Position auch an der elektronischen Anzeigeeinrichtung der Bedieneinheit beobachten, während er den jeweiligen Parameter (z.B. Fokuslage) mittels des drehbaren Bedienelements variiert. Hierbei ist von Vorteil, dass die vorbestimmten Darstellungswerte allein durch Koppeln des Kennzeichnungsrings mit der Bedieneinheit automatisch eingelesen und an der Anzeigeeinrichtung zur Darstellung gebracht werden können.

Die durch die Kodierung repräsentierten vorbestimmten Darstellungswerte können insbesondere Zahlenwerte umfassen. Die Auswerte- und Steuereinrichtung kann dazu ausgebildet ist, an der Anzeigeeinrichtung zusätzliche Informationen anzuzeigen, insbesondere eine Schärfentiefe. Diese zusätzlichen Informationen können durch die ausgelesene Kodierung unmittelbar repräsentiert sein oder von der Auswerte- und Steuereinrichtung berechnet werden, insbesondere unter Verwendung von weiteren Informationen, die beispielsweise von der Bewegtbildkamera oder dem zugeordneten Kameraobjektiv geliefert werden (z.B. Wert der Irisblendenöffnung).

Ferner kann die Auswerte- und Steuereinrichtung dazu ausgebildet sein, eine veränderliche Position der angezeigten Darstellungswerte an der Anzeigeeinrichtung in Abhängigkeit von den Einstellwerten des Objektivs festzulegen, wobei es sich bei den Einstellwerten des Objektivs um Soll-Werte oder Ist-Werte eines Aufnahmeparameters des Objektivs handeln kann. Somit kann die an der Anzeigeeinrichtung dargestellte Position der Darstellungswerte, insbesondere relativ zu einer Stellwertmarkierung, dynamisch an die einzustellenden oder eingestellten Parameterwerte angepasst werden, wie dies der Drehstellung des drehbaren Bedienelements entspricht. Als Soll-Werte können insbesondere die Positionssignale des Positionsgebers oder hieraus abgeleitete Werte verwendet werden. Als Ist-Werte können Positionsmesswerte (insbesondere sogenannte Encoder-Werte) des entsprechenden Objektiv-Stellmotors verwendet werden. Hierfür kann die Bedieneinheit eine Empfangseinrichtung aufweisen, um die Positionsmesswerte von dem jeweiligen Objektiv-Stellmotor direkt oder indirekt (insbesondere über die Bewegtbildkamera oder eine zugeordnete Objektivring-Antriebseinheit) zu empfangen. An der Anzeigeeinrichtung können auch Soll-Werte und Ist-Werte des jeweiligen Aufnahmeparameters gleichzeitig angezeigt werden.

Die Fernsteuereinrichtung kann den genannten Kennzeichnungsring mit auslesbarer Kodierung aufweisen.

Auch die Verwendung einer Fernsteuereinrichtung der genannten Art kann vorgesehen sein, um eine an einem gekoppelten Kennzeichnungsring vorgesehene bzw. gespeicherte Kodierung auszulesen.

Ferner betrifft die Erfindung einen Kennzeichnungsring zum Kennzeichnen von Steuerbefehlen für einen Objektiv-Stellmotor einer Bewegtbildkamera, insbesondere zur Verwendung bei einer Fernsteuereinrichtung wie vorstehend für verschiedene Ausführungsformen beschrieben. Der Kennzeichnungsring ist drehfest mit einem drehbaren Bedienelement einer Fernsteuereinrichtung zum Einstellen von Steuerbefehlen für den Objektiv-Stellmotor koppelbar, wobei der Kennzeichnungsring eine Kennzeichnung der einstellbaren Steuerbefehle trägt oder mit einer solchen Kennzeichnung versehbar ist. Ferner weist der Kennzeichnungsring einen Speicher auf, in dem eine Kodierung gespeichert oder speicherbar ist, wobei der Speicher eine Schnittstelle aufweist oder mit einer Schnittstelle verbunden ist, über welche die Kodierung aus dem Speicher auslesbar und/oder in den Speicher einschreibbar ist.

Der Kennzeichnungsring weist somit einen Speicher auf, in dem eine Kodierung, insbesondere ein Datensatz, gespeichert oder speicherbar ist. Die Kodierung kann von der gekoppelten Fernsteuereinrichtung insbesondere für eine Steuerung oder Darstellung von Informationen im Zusammenhang mit der Bewegtbildkamera und/oder dem Objektiv-Stellmotor verwendet werden (z.B. für eine Steuerung des Objektiv-Stellmotors oder für ein Darstellen von geeigneten Einstellwerten an einer Anzeigeeinrichtung Fernsteuereinrichtung). Die Kodierung kann insbesondere eine Kodierung einer Zuordnungsvorschrift und/oder einen Wertezusammenhang umfassen, wie nachstehend noch für verschiedene Ausführungsformen erläutert wird.

Die Kodierung bzw. der Datensatz kann insbesondere in elektronischer Form speicherbar, auslesbar und/oder einschreibbar sein. Der in den Kennzeichnungsring integrierte Speicher ermöglicht eine Nutzung des Kennzeichnungsrings als Speichermedium, insbesondere im Falle einer Individualisierung des Kennzeichnungsrings oder der gekoppelten Fernsteuereinrichtung durch den Benutzer. Der in den Kennzeichnungsring integrierte Speicher kann eine automatische Konfigurierung der gekoppelten Fernsteuereinrichtung unterstützen.

Der Kennzeichnungsring kann insbesondere hohlzylindrisch, scheibenförmig oder hohlzylindrisch mit einem scheibenförmigen Flanschabschnitt ausgebildet und auf das drehbare Bedienelement aufsteckbar sein. Dabei kann die Kennzeichnung insbesondere durch eine Beschriftung an einer sichtbaren Außenseite des Kennzeichnungsrings gebildet sein und beispielsweise Skalenmarkierungen (z.B. Strichemuster) sowie zugeordnete Steuerbefehle bzw. Zahlenwerte anzeigen, auf welche ein Parameter einer Bewegtbildkamera (einschließlich des Objektivs) bei einer jeweiligen Drehstellung des Bedienelementes eingestellt sein soll.

Die Schnittstelle kann direkt oder indirekt mit dem Speicher verbunden sein. Über die Schnittstelle des Speichers kann die Kodierung insbesondere in Form eines elektrischen Signals auslesbar sein.

Durch den Speicher, welcher über die Schnittstelle ein Auslesen von gespeicherten Informationen ermöglicht, kann eine dem Kennzeichnungsring entsprechende Kodierung beim Koppeln des Kennzeichnungsrings mit einem Bedienelement an eine zugehörige Fernsteuereinrichtung übermittelt und beim Einstellen von Stellsignalen für einen Objektiv-Stellmotor insbesondere automatisch angewandt werden. Dadurch kann sich die Anpassung der Fernsteuereinrichtung an eine bestimmte Anwendung und/oder an ein bestimmtes Kameraobjektiv vereinfachen. Alternativ oder zusätzlich kann über die Schnittstelle eine Kodierung von einer gekoppelten Fernsteuereinrichtung in den Speicher des Kennzeichnungsrings eingelesen bzw. geschrieben werden. Der Kennzeichnungsring kann somit als mobiles Speichermedium genutzt werden, um beispielsweise eine bestimmte (insbesondere individuell konfigurierte) Zuordnungsvorschrift zu speichern und später in eine (beliebige andere) gekoppelte Fernsteuereinrichtung zu übertragen.

Die Schnittstelle des Speichers kann bei einigen Ausführungsformen dazu ausgebildet sein, die Kodierung durch elektrische Kontaktierung, durch magnetische Kopplung oder durch elektromagnetische Signalübertragung.

Die Schnittstelle kann insbesondere dazu ausgebildet sein, von einer Leseeinrichtung der gekoppelten Fernsteuereinrichtung elektrisch kontaktiert zu werden. Dies kann ein direktes Auslesen der Kodierung und Ermitteln der Zuordnungsvorschrift bei einem Koppeln des Kennzeichnungsrings mit der Fernsteuereinrichtung ermöglichen. Eine elektromagnetische Signalübertragung hingegen kann kontaktlos erfolgen (insbesondere durch Übertragung der Kodierung in Form eines Funksignals).

Der Speicher des Kennzeichnungsrings kann bei einigen Ausführungsformen ein elektronischer Speicher sein und insbesondere durch einen Festkörperspeicher (z.B. EEPROM) oder durch einen Mikrochip (insbesondere mit nichtflüchtiger Speicherfunktion) gebildet sein. Gemäß einer besonders einfachen Ausführungsform kann der Speicher durch einen elektrischen Widerstand gebildet sein.

Der Speicher kann von einer wasserdichten Schutzhülle umgeben sein. Dies kann eine Beschädigung des Speichers durch eintretendes Wasser verhindern, wobei die Schutzhülle eine Öffnung aufweisen kann, durch welche die Schnittstelle kontaktierbar ist.

Die Kodierung kann bei einigen Ausführungsformen einen Betriebsdatensatz für die gekoppelte Fernsteuereinrichtung repräsentieren, wobei die Schnittstelle des Speichers dazu ausgebildet ist, mit einer Leseeinrichtung der gekoppelten Fernsteuereinrichtung zusammenzuwirken, um die Kodierung aus dem Speicher auszulesen.

Bei einigen Ausführungsformen kann die Kennzeichnung des Kennzeichnungsrings einer Zuordnungsvorschrift zur Zuordnung der Steuerbefehle zu jeweiligen Drehstellungen des Bedienelementes entsprechen, wobei die Kodierung die Zuordnungsvorschrift repräsentiert. Die Zuordnungsvorschrift kann, wie bereits erläutert, insbesondere eine Abhängigkeit der Stellsignale für einen Objektiv-Stellmotor der zugeordneten Bewegtbildkamera von Positionssignalen eines Positionsgebers der Fernsteuereinrichtung beschreiben. In dem Speicher des Kennzeichnungsrings kann die Zuordnungsvorschrift selbst oder eine Information über den verwendeten Kennzeichnungsring bzw. die Zuordnungsvorschrift gespeichert sein, anhand welcher die Zuordnungsvorschrift bestimmbar ist. Dazu kann in einer Fernsteuereinrichtung beispielsweise eine Nachschlagetabelle (look-up table, LUT) gespeichert sein, die jeweiligen Kennzeichnungsringen entsprechende Zuordnungsvorschriften zuweist.

Bei einigen Ausführungsformen kann die Kodierung ein sogenanntes "Lens File" in Form eines Satzes von Darstellungswerten für eine elektronische Darstellung von Einstellwerten eines zugeordneten Kameraobjektivs repräsentieren. Insbesondere kann die Kodierung einen Zusammenhang zwischen den Einstellwerten und den Darstellungswerten repräsentieren. Alternativ oder zusätzlich kann die Kodierung vorbestimmte Darstellungswerte und/oder zusätzliche Informationen umfassen, beispielsweise eine Schärfentiefe. Wie bereits im Zusammenhang mit dem "Lens File" erläutert, kann die Bedieneinheit einer zugehörigen Fernsteuereinrichtung eine elektronische Anzeigeeinrichtung aufweisen, an der vorbestimmte Darstellungswerte angezeigt werden, die jeweiligen Einstellwerten eines zugeordneten Objektivs der Bewegtbildkamera entsprechen und durch die aus dem Speicher ausgelesene Kodierung vorbestimmt sind. Die vorbestimmten Darstellungswerte können insbesondere Markierungen entsprechen, die an einem Objektivring des zugeordneten Objektivs angebracht sind (z.B. eingraviert). Der Benutzer kann somit die ihm von dem jeweiligen Objektivring bekannten Darstellungswerte und deren Position auch an der elektronischen Anzeigeeinrichtung der Bedieneinheit beobachten, während er den jeweiligen Parameter (z.B. Fokuslage) mittels des drehbaren Bedienelements variiert. Hierbei ist von Vorteil, dass die vorbestimmten Darstellungswerte allein durch Koppeln des Kennzeichnungsrings mit der Bedieneinheit automatisch eingelesen und an der Anzeigeeinrichtung zur Darstellung gebracht werden können.

Ferner bezieht sich die Erfindung auf eine Fernsteuereinrichtung wie hierin offenbart, die einen Kennzeichnungsring der vorstehend beschriebenen Art aufweist.

Die Erfindung wird im Folgenden rein beispielhaft anhand von Ausführungsbeispielen unter Bezugnahme auf die Zeichnungen erläutert.

Es zeigen
- Fig. 1: eine schematische Darstellung einer Bewegtbildkamera mit Objektiv-Stellmotoren,
- Fig. 2: eine Darstellung einer Fernsteuereinrichtung zum Erzeugen von Stellsignalen für die Objektiv-Stellmotoren der Bewegtbildkamera,
- Fig. 3 bis 6: jeweilige schematische Darstellungen möglicher Ausführungsformen der Fernsteuereinrichtung und
- Fig. 7A und 7B: jeweilige Darstellungen eines Kennzeichnungsrings zur Kopplung mit der Fernsteuereinrichtung.

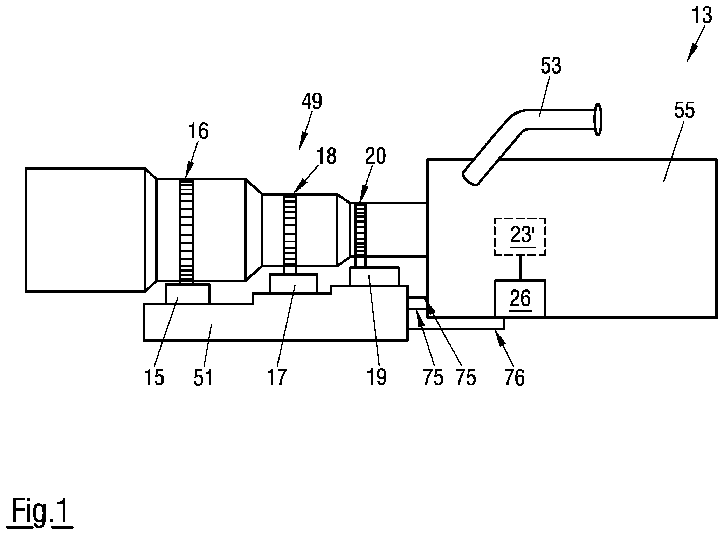

Fig. 1 zeigt eine Bewegtbildkamera 13 mit einem Kamerakörper 55, an welchem ein Wechselobjektiv 49 befestigt ist. Dieses Wechselobjektiv 49 weist drei Objektivringe 16, 18 und 20 auf, mittels derer jeweilige Parameter der Bewegtbildkamera 13 (bzw. des Objektivs 49) eingestellt werden können. Beispielsweise kann der erste Objektivring 16 dazu vorgesehen sein, durch Drehungen die Fokuslage des Wechselobjektivs 49 anzupassen, während mittels des zweiten Objektivrings 18 beispielsweise die Brennweite einstellbar sein kann. Der Objektivring 20 kann beispielsweise dazu vorgesehen sein, die Irisblendenöffnung anzupassen. Um die Objektivringe 16, 18 und 20 verstellen zu können, sind jeweilige Objektiv-Stellmotoren 15, 17 und 19 vorgesehen. Diese Stellmotoren 15, 17 und 19 sind auf einer Objektivring-Antriebseinheit 51 angeordnet, welche über zwei Haltestangen 75 mechanisch und über eine Signalleitung 76 signaltechnisch mit dem Kamerakörper 55 verbunden ist.

Um ein jeweiliges mittels des Wechselobjektivs 49 anvisiertes Bild und damit die korrekte Ausrichtung der Bewegtbildkamera 13 überprüfen zu können, ist an dem Kamerakörper 55 ferner ein Sucher 53 angeordnet. Durch die Ausbildung der Bewegtbildkamera 13 mit einem Wechselobjektiv 49 können insbesondere auch andersartige Objektive und darauf abgestimmte Objektivring-Antriebseinheiten mit dem Kamerakörper 55 verbunden werden. Beispielsweise können so in Abhängigkeit von der aufzunehmenden Szene variabel jeweilige optimal geeignete Objektive mit dem Kamerakörper 55 verbunden werden. Insbesondere können auch Objektive mit fester Brennweite vorgesehen sein, bei welchen lediglich die Fokuslage und/oder die Irisblendenöffnung über jeweilige Objektivringe einstellbar ist bzw. sind.

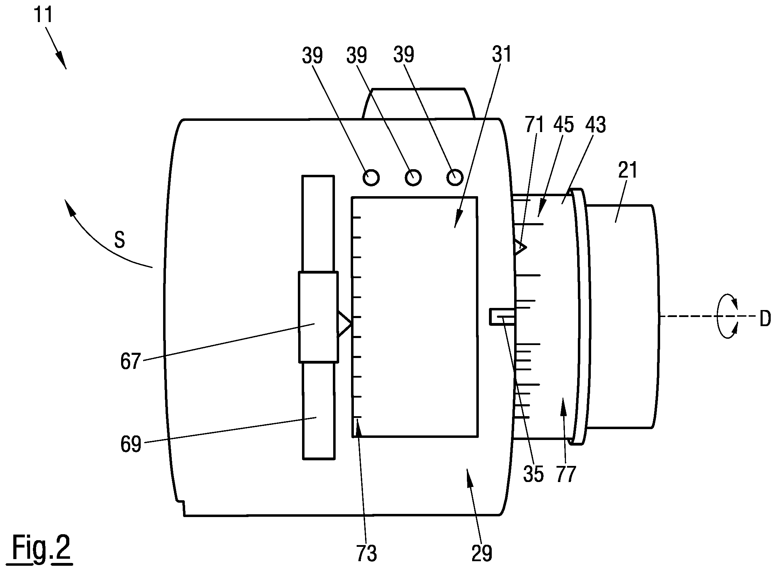

Während einer Aufnahme mittels einer solchen Bewegtbildkamera 13 kann es häufig vorgesehen sein, die Anpassung der genannten Parameter durch Einstellen der Objektivringe 16, 18 und 20 ferngesteuert durchzuführen, sodass sich ein Kameramann ausschließlich auf die korrekte Ausrichtung der Bewegtbildkamera 13 konzentrieren kann. Die Einstellung der Parameter der Bewegtbildkamera 13 kann dabei durch eine weitere Person, insbesondere einen Kameraassistenten oder einen Schärfezieher, mittels einer Fernsteuereinrichtung erfolgen, über die der Benutzer Stellsignale S für die jeweiligen Objektiv-Stellmotoren 15, 17 und 19 einstellen und an die Bewegtbildkamera 13 übermitteln kann. Eine mögliche Ausführungsform einer solchen Fernsteuereinrichtung für die Bewegtbildkamera 13 ist in Fig. 2 gezeigt.

Die in Fig. 2 gezeigte Fernsteuereinrichtung umfasst eine tragbare Bedieneinheit 11. Diese weist ein Basisteil 29 und ein relativ zu dem Basisteil 29 um eine Drehachse D drehbares Bedienelement 21 auf, mittels dessen Steuerbefehle für die Bewegtbildkamera 13 bzw. zumindest einen der Objektiv-Stellmotoren 15, 17 und 19 eingestellt werden können. Die Steuerbefehle entsprechen dabei insbesondere einem Wert, auf welchen der von dem jeweiligen Objektivring 16, 18 oder 20 beeinflusste Parameter einzustellen ist.

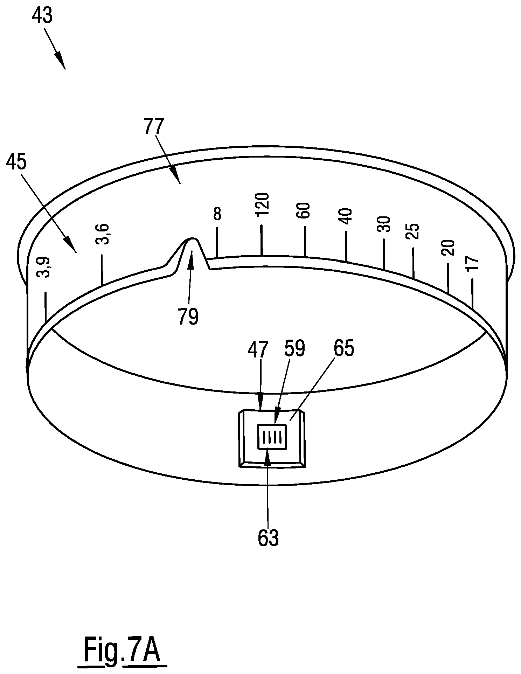

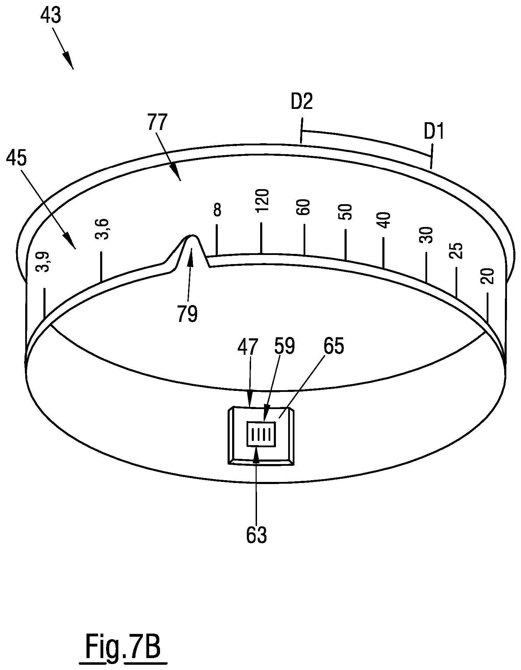

Mit dem Bedienelement 21 ist ein Kennzeichnungsring 43 drehfest verbunden, welcher hohlzylinderförmig ausgebildet und auf das Bedienelement 21 axial bezüglich der Drehachse D aufsetzbar ist. An seiner Außenseite 77 trägt der Kennzeichnungsring 43 eine Kennzeichnung 45 in Form einer Skala (Skalenmarkierungen und/oder Skala von Zahlenwerten), an welcher die eingestellten Steuerbefehle bzw. Werte des beeinflussten Parameters der Bewegtbildkamera 13 ablesbar sind. Um den eingestellten Steuerbefehl bzw. die Drehstellung des Bedienelements 21 anzeigen zu können, ist an dem Basisteil 29 eine Stellwertmarkierung 35 angebracht. Ferner weist das Bedienelement 21 eine Koppeleinrichtung 71 in Form einer Erhebung auf, die in eine zugeordnete Aussparung 79 des Kennzeichnungsrings 43 eingreift (vgl. auch Fig. 7A und 7B). Dieser Eingriff der Koppeleinrichtung 71 gewährleistet die drehfeste Kopplung zwischen dem Bedienelement 21 und dem Kennzeichnungsring 43 bei vorgegebener relativer Drehstellung zwischen dem Kennzeichnungsring 43 und dem Bedienelement 21, um eine korrekte Zuordnung der Steuerbefehle zu Drehstellungen des Bedienelements 21 sicherzustellen.

Um die mittels der Bedieneinheit 11 vorgenommenen Einstellungen weiter überprüfen oder anpassen zu können, weist das Basisteil 29 der Fernsteuereinrichtung eine elektronische Anzeigeeinrichtung 31 auf. Diese Anzeigeeinrichtung 31 stellt mittels einer Anzeige 73 Informationen für einen Benutzer bereit, die beispielsweise einen weiteren Parameter der Bewegtbildkamera 13 oder eine Auswahlmöglichkeit zur Einstellung der Fernsteuereinrichtung selbst betreffen können. Ferner ist ein in einer Führung 69 geführter Schieberegler 67 vorgesehen, mittels dessen beispielsweise durch die Anzeige 73 angezeigte Einstellungen ausgewählt werden können. Darüber hinaus weist das Basisteil 29 drei Tasten 39 auf, um ebenfalls Einstellungen an der Fernsteuereinrichtung selbst oder der Bewegtbildkamera 13 vornehmen zu können. Beispielsweise kann es vorgesehen sein, mittels einer der Tasten 39 die Bewegtbildkamera 13 wahlweise ein- oder auszuschalten oder eine Aufnahme zu starten oder zu unterbrechen.

Durch die bereits genannte Kennzeichnung 45 des Kennzeichnungsrings 43 ist eine Zuordnung von Steuerbefehlen für die Bewegtbildkamera 13 bzw. von Parameterwerten der Bewegtbildkamera 13 zu Drehstellungen des Bedienelements 21 definiert, sodass ein Benutzer vorgenommene Einstellungen auf einfache Weise überprüfen kann. Um diese dem Benutzer angezeigte Zuordnung ausführen zu können, müssen mittels der Fernsteuereinrichtung Stellsignale S für die Objektiv-Stellmotoren 15, 17 und 19 erzeugt werden, welche die Steuerbefehle erfüllen und den jeweiligen Objektivring 16, 18 oder 20 in die vorgesehene Drehstellung überführen. Auch diese Stellsignale S müssen somit anhand einer Zuordnungsvorschrift jeweiligen Drehstellungen des Bedienelements 21 zugeordnet werden.

Die Stellsignale S können dabei insbesondere Drehstellungen des angesteuerten Objektivrings 16, 18 oder 20 repräsentieren. In der Regel bedingt dabei eine Drehung eines der Objektivringe 16, 18 oder 20 eine Veränderung des jeweiligen Parameters, beispielsweise einer Fokuslage, in einer 1/x-Abhängigkeit von der Drehstellung des Objektivrings 16, 18 oder 20. Entsprechend spiegelt auch die Kennzeichnung 45 des Kennzeichnungsrings 43, wie insbesondere in Fig. 7A dargestellt, meist eine solche 1/x-Abhängigkeit wider, so dass ein Drehen des Bedienelements 21 im Wesentlichen einem direkten Drehen an den jeweiligen Objektivringen 16, 18 oder 20 entspricht. Die Einstellung mittels der Fernsteuereinrichtung 11 hat somit keine wesentlichen Unterschiede im Vergleich zu einer direkten Einstellung der Bewegtbildkamera 13 zur Folge. Insofern ist meist ein einfacher linearer Zusammenhang zwischen einer Drehstellung des Bedienelements 21 und dem erzeugten Stellsignal S vorgesehen.

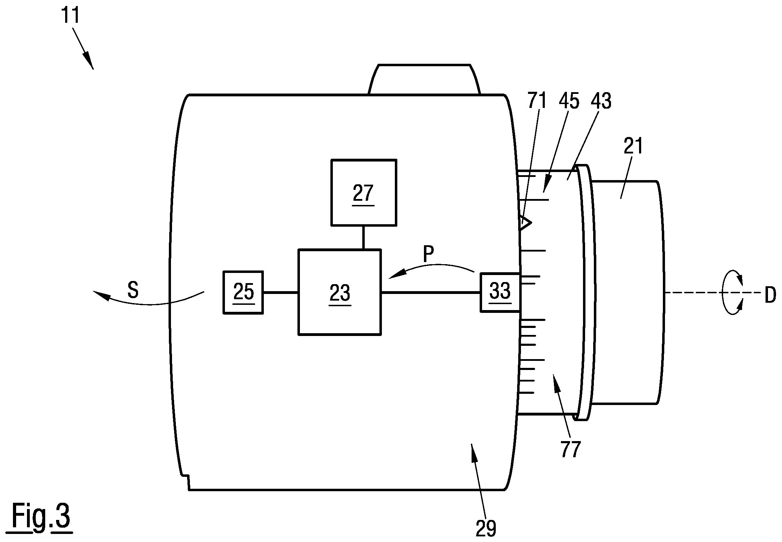

Wie die Fig. 3 bis 6 zeigen, weist die Fernsteuereinrichtung 11 grundsätzlich einen Positionsgeber 33 auf, mittels dessen die Drehstellung des Bedienelementes 21 relativ zu dem Basisteil 29 bestimmt und ein entsprechendes Positionssignal P erzeugt werden kann. Der Positionsgeber 33 ist mit einer Auswerte- und Steuereinrichtung 23 verbunden, an welche das Positionssignal P übermittelt wird. Die Auswerte- und Steuereinrichtung 23 ist dazu ausgebildet, anhand einer Zuordnungsvorschrift ein dem jeweiligen Positionssignal P zugeordnetes Stellsignal S für einen der Objektiv-Stellmotoren 15, 17 oder 19 zu ermitteln und mit einer Ausgabeeinrichtung 25 verbunden, um das erzeugte Stellsignal S an die Bewegtbildkamera 13 bzw. den jeweiligen Objektiv-Stellmotor 15, 17 oder 19 zu senden. In den gezeigten Ausführungsformen ist die Ausgabeeinrichtung 25 zu einem drahtlosen Übermitteln des Stellsignals S ausgebildet, wobei grundsätzlich auch eine kabelgebundene Übermittlung vorgesehen sein kann. An der Bewegtbildkamera 13 ist eine Empfangseinrichtung 26 vorgesehen, um das Stellsignal S zu empfangen und an die Objektiv-Stellmotoren 15, 17 oder 19 weiterzuleiten (insbesondere über die Signalleitung 76 und/oder die Objektivring-Antriebseinheit 51).

Während die vorstehend beschriebene herkömmliche Zuordnungsvorschrift, die eine lineare Zuordnung von Stellsignalen S zu Positionssignalen P beschreibt, grundsätzlich eine intuitive Bedienung der Bewegtbildkamera 13 bei einer 1/x Abhängigkeit des eingestellten Parameters von der Drehstellung des Bedienelementes 21 ähnlich einer direkten Bedienung an den Objektivringen 16, 18 oder 20 selbst ermöglicht, kann in bestimmten Situationen bzw. bei bestimmten Aufnahmen eine andere Zuordnung zwischen den Drehstellungen des Bedienelements 21 und den eingestellten Parameterwerten gewünscht sein. Insbesondere kann zumindest in einem bestimmten Wertebereich anstelle der 1/x-Abhängigkeit ein linearer Zusammenhang zwischen dem eingestellten Parameter und der Drehstellung des Bedienelements 21 von einem Benutzer gewünscht sein, um beispielsweise langsame und fein justierbare Veränderungen einer Fokuslage erreichen zu können.

Um eine individuelle Definition bzw. Anpassung der Zuordnungsvorschrift zur Zuordnung von Stellsignalen S zu Positionssignalen P erreichen zu können, ist gemäß Fig. 3 daher eine Eingabeeinrichtung 27 vorgesehen, mittels derer die Zuordnungsvorschrift durch Benutzereingabe konfigurierbar ist. Dabei entspricht diese Zuordnungsvorschrift wenigstens einem mathematischen Funktionszusammenhang. Für die Eingabeeinrichtung 27 sind unterschiedliche Ausführungsformen der Benutzer-Interaktion möglich.

Um eine Konfiguration der Zuordnungsvorschrift zu ermöglichen, kann die Eingabeeinrichtung 27 insbesondere die in Fig. 2 dargestellte Anzeigeeinrichtung 31 umfassen, welche einem Benutzer in einem Konfigurationsmodus der Fernsteuereinrichtung Einstellmöglichkeiten zu Konfigurationen des mathematischen Funktionszusammenhangs anzeigen kann. Ferner kann die Anzeigeeinrichtung 31 berührungsempfindlich ausgebildet sein, so dass ein Benutzer direkt Einstellungen an der Anzeigeeinrichtung 31 vornehmen kann und hierbei visuell geführt wird. Ebenso kann die Eingabeeinrichtung 27 mittels einer bzw. der Tasten 39, dem Schieberegler 67 oder, im Konfigurationsmodus, des Bedienelements 21 bedienbar sein, wobei beispielsweise durch von dem Positionsgeber 33 erfasste Drehungen des Bedienelements 21 auf der Anzeigeeinrichtung 31 angezeigte Einstellungen zur Konfiguration der Zuordnungsvorschrift ausgewählt werden können.

Beispielsweise kann ein Benutzer der Fernsteuereinrichtung einen Wertebereich auswählen, in welchem ein linearer Zusammenhang zwischen der Drehstellung des Bedienelements 21 und dem tatsächlich eingestellten Parameterwert an der Bewegtbildkamera 13 (bzw. dem Objektiv 49) bestehen soll. Die Eingabeeinrichtung 27 selbst oder die Auswerte- und Steuereinrichtung 23 kann dabei dazu ausgebildet sein, die Zuordnungsvorschrift zur Zuordnung von Stellsignalen S zu Positionssignalen P derart anzupassen, dass letztlich ein linearer Zusammenhang zwischen den Positionssignalen P und den eingestellten Steuerbefehlen bzw. dem beeinflussten Parameter der Bewegtbildkamera 13 besteht. Insbesondere kann dabei für den genannten Wertebereich im Wesentlichen eine 1/x-Abhängigkeit des Stellsignals S von dem Positionssignal P erzeugt werden.

Neben einer solchen Wahl eines Wertebereichs der Positionssignale P oder Stellsignale S und des Auswählens eines linearen Zusammenhangs in diesem Wertebereich zwischen Drehstellungen des Bedienelements 21 und Steuerbefehlen für die Bewegtbildkamera 13 kann es auch vorgesehen sein, dass ein Benutzer lediglich Startwerte solcher Wertebereiche auswählt und einen mathematischen Funktionszusammenhang eingibt oder bestimmt, der für größere oder kleinere Werte als der Startwert gelten soll. Ferner kann der Benutzer mehrere Paare von Werten von Positionssignalen P und Stellsignalen S eingeben, wobei die Auswerte- und Steuereinrichtung 23 dazu ausgebildet sein kann, die Zuordnungsvorschrift zwischen diesen Paaren durch Regression oder Interpolation anhand einer ausgewählten oder vorgegebenen Funktion zu bestimmen. Ebenso kann es vorgesehen sein, dass ein Benutzer verschiedene Wertebereiche und für diese Wertebereiche jeweilige, gegebenenfalls voneinander verschiedene Funktionen auswählen kann. Beispielsweise können einem Benutzer Potenzfunktionen, lineare Funktionen, Polynomfunktionen oder exponentielle Funktionen zur Auswahl gestellt werden. Die Auswerte- und Steuereinrichtung 23 kann dabei dazu ausgebildet sein, Wertebereiche derart zu verbinden, dass die Zuordnungsvorschrift durch eine stetige monotone Funktion beschrieben ist.

Grundsätzlich kann es sowohl vorgesehen sein, dass einem Benutzer mittels der Anzeigeeirichtung 31 direkte Einstellungsmöglichkeiten für die Zuordnungsvorschrift zwischen den Positionssignalen P und den Stellsignalen S angezeigt werden, während es auch möglich ist, dass ein Benutzer eine gewünschte Zuordnung zwischen Drehstellungen des Bedienelements 21 und erzeugten Steuerbefehlen auswählt und anpasst. In diesem Fall kann die Eingabeeinrichtung 27 oder die Auswerte- und Steuereinrichtung 23 die dadurch definierte Zuordnungsvorschrift zwischen den Positionssignalen P und den Stellsignalen S automatisch konfigurieren, sodass der Benutzer durch die Wahl der Zuordnung von Steuerbefehlen zu Drehstellungen des Bedienelementes 21 letztlich indirekt auch die Zuordnungsvorschrift von Stellsignalen S zu Positionssignalen P konfigurieren kann.

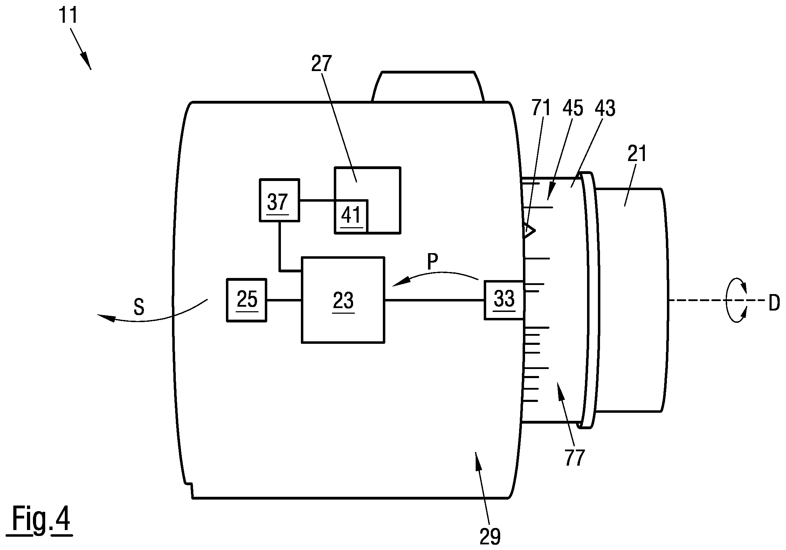

Wie Fig. 4 zeigt, kann die Eingabeeinrichtung 27 ferner einen Funkempfänger 41 umfassen, mittels dessen eine individuelle Zuordnungsvorschrift von einem mobilen Kommunikationsgerät des Benutzers empfangen werden kann. Ein Benutzer kann dadurch die Zuordnungsvorschrift komfortabel an einem mobilen Gerät erstellen und an die Fernsteuereinrichtung übermitteln.

Während die Auswerte- und Steuereinrichtung 23 grundsätzlich dazu ausgebildet sein kann, die Zuordnungsvorschrift bzw. das einem jeweiligen Positionssignal P zugeordnete Stellsignal S zu berechnen, kann es auch vorgesehen sein, dass die Auswerte- und Steuereinrichtung die Zuordnungsvorschrift in einer Nachschlagetabelle (Look-up table, LUT) nachschlägt. Dazu kann die Fernsteuereinrichtung insbesondere in dem Basisteil 19 der Bedieneinheit 11 einen Speicher 37 aufweisen, in dem die Zuordnungsvorschrift beispielsweise dauerhaft gespeichert sein kann, um die konfigurierte Zuordnungsvorschrift bei einer späteren erneuten Verwendung der Fernsteuereinrichtung unmittelbar nutzen zu können (vgl. Fig. 4). Alternativ kann der Speicher 37 die Zuordnungsvorschrift lediglich temporär speichern und als Arbeitsspeicher der Auswerte- und Steuereinrichtung 23 dienen.

Bei der in Fig. 3 und 4 gezeigten Ausführungsform der Fernsteuereinrichtung ist die Auswerte-und Steuereinrichtung 23 in das Basisteil 19 der Bedieneinheit 11 integriert. Alternativ hierzu kann auch ein modularer Aufbau der Fernsteuereinrichtung vorgesehen sein, bei dem die die Auswerte- und Steuereinrichtung separat von der Bedieneinheit 11 ausgebildet und in oder an der Bewegtbildkamera 13 angeordnet ist. Somit erfolgt das Ermitteln der Stellsignale S gemäß der Zuordnungsvorschrift in Abhängigkeit von den Positionssignalen P seitens der Bewegtbildkamera 13. Dies ist in Fig. 1 durch die Auswerte- und Steuereinrichtung 23' illustriert (gestrichelt dargestellt), welche über die Empfangseinrichtung 26 die Positionssignale von der Ausgabeeinrichtung 25 der Bedieneinheit 11 erhält. Die Auswerte- und Steuereinrichtung 23' übermittelt die Stellsignale S über die Signalleitung 76 an die Objektivring-Antriebseinheit 51 bzw. die Objektiv-Stellmotoren 15, 17 und 19. Die Auswerte- und Steuereinrichtung 23' könnte beispielsweise auch in die Objektivring-Antriebseinheit 51 integriert sein.

In entsprechender Weise könnte auch die Eingabeeinrichtung 27 der Fernsteuereinrichtung oder ein Teil hiervon in oder an der Bewegtbildkamera 13 angeordnet sein.

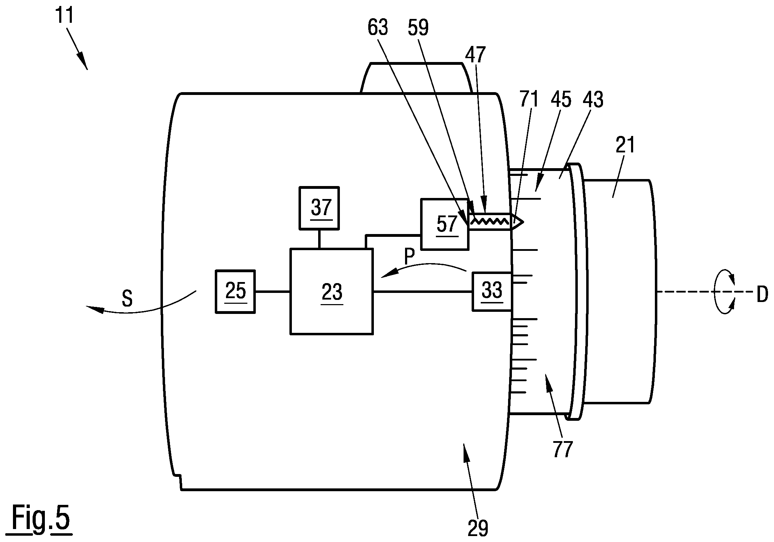

Fig. 5 zeigt eine weitere Möglichkeit, den Einsatz der Fernsteuereinrichtung variabel zu gestalten. Dabei ist eine Eingabeeinrichtung 27 zum Konfigurieren der Zuordnungsvorschrift nicht zwingend vorgesehen, sondern die Bedieneinheit 11 der Fernsteuereinrichtung weist eine Leseeinrichtung 57 auf, welche dazu ausgebildet ist, einen Speicher 47 des Kennzeichnungsrings 43 über eine dazu vorgesehene Schnittstelle 63 auszulesen (vgl. auch Fig. 7A und 7B). In den Speicher 47 ist eine Kodierung 59 geschrieben, welche von der Leseeinrichtung 57 ausgelesen werden kann, beispielsweise durch elektrische Kontaktierung, durch magnetische Kopplung oder durch elektromagnetische Signalübertragung. Die gespeicherte Kodierung 59 kann generell einen Betriebsdatensatz repräsentieren, beispielsweise eine Information über eine erwünschte oder eingestellte Betriebsart der Fernsteuereinrichtung, der Bewegtbildkamera 13 oder des Kameraobjektivs 49.

Gemäß einer Ausführungsform kann die Leseeinrichtung 57 ferner mit der Auswerte- und Steuereinrichtung 23 verbunden sein, welche dazu ausgebildet sein kann, aus der ermittelten Kodierung 59 die durch die Kennzeichnung 45 des Kennzeichnungsrings 43 definierte Zuordnungsvorschrift zur Zuordnung von Stellsignalen S zu Positionssignalen P zu bestimmen und - wie erläutert - die Stellsignale S anhand dieser Zuordnungsvorschrift zu erzeugen.

Die Kodierung 59 kann dabei beispielsweise die Zuordnungsvorschrift selbst repräsentieren, so dass die Auswerte- und Steuereinrichtung 23 über die Leseeinrichtung 57 die Zuordnungsvorschrift direkt aus dem Speicher 47 des Kennzeichnungsrings 43 entnehmen kann. Ferner kann die Kodierung 59 eine Information über den Kennzeichnungsring 43 enthalten, anhand derer der Kennzeichnungsring 43 identifizierbar ist, wobei in dem Speicher 37 die dem Kennzeichnungsring 43 entsprechende Zuordnungsvorschrift gespeichert sein kann. Dabei können solche Zuordnungsvorschriften für eine Vielzahl erkennbarer Kennzeichnungsringe 43 gespeichert sein, so dass durch Koppeln des jeweiligen Kennzeichnungsrings 43 mit dem Bedienelement 21 automatisch die durch die Kennzeichnung 45 dargestellte Zuordnungsvorschrift angewandt werden kann, ohne dass ein Benutzer weitere Eingaben tätigen muss. Insbesondere kann die Leseeinrichtung 57 die Kodierung dabei durch elektrische Kontaktierung, durch magnetische Kopplung, durch elektromechanische Signalübertragung oder durch elektromechanische Umsetzung auslesen.

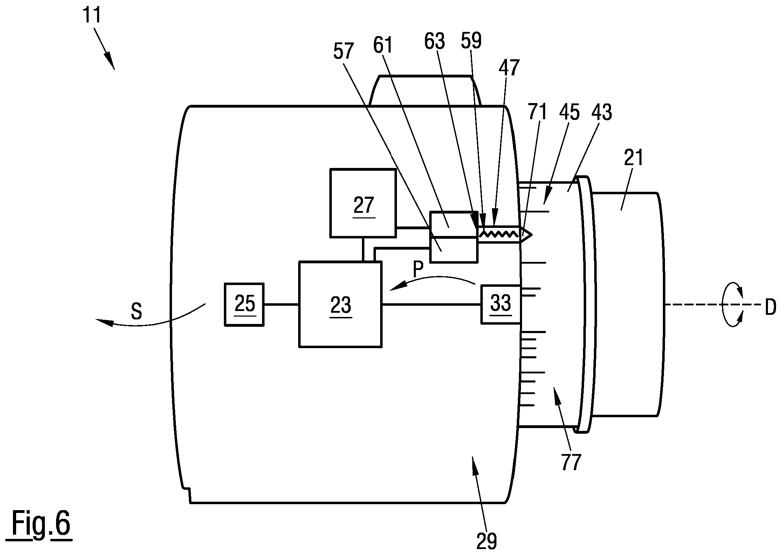

Wie Fig. 6 zeigt, kann zusätzlich zu einer solchen Leseeinrichtung 57 zum Auslesen der Kodierung 59 auch die Eingabeeinrichtung 27 vorgesehen sein, wobei diese mit einer Schreibeinrichtung 61 verbunden sein kann. Die Leseeinrichtungen 57 und die Schreibeinrichtung 61 können dabei eine gemeinsame Schreib-/Leseeinrichtung bilden, wobei die Leseeinrichtung 57 und die Schreibeinrichtung 61 ferner auch Bestandteile der Eingabeeinrichtung 27 sein können. Mittels der Eingabeeinrichtung 27 kann, wie vorstehend beschrieben, eine individuelle Zuordnungsvorschrift konfiguriert werden, die mittels der Schreibeinrichtung 61 durch Verändern oder Erstellen der Kodierung in den Speicher 47 des Kennzeichnungsrings 43 geschrieben werden kann. Dadurch können individuelle Kennzeichnungsringe 43 konfiguriert werden, wobei deren Zuordnungsvorschrift bei einer späteren Kopplung mit der Bedieneinheit 11 unmittelbar von der Leseeinrichtung 57 erfasst werden kann. Um die individuell konfigurierte Zuordnungsvorschrift bzw. die daraus folgende Zuordnung von Drehstellungen des Bedienelements 21 zu eingestellten Parameterwerten der Bewegtbildkamera 13 anzeigen zu können, kann eine dieser Zuordnungsvorschrift entsprechende Kennzeichnung 45 auf dem Kennzeichnungsring 43 aufbringbar, insbesondere aufdruckbar und/oder aufklebbar, sein.

Die aus dem Speicher 47 des Kennzeichnungsrings 43 ausgelesene Kodierung 59 muss jedoch nicht unbedingt eine Zuordnungsvorschrift repräsentieren. Alternativ oder zusätzlich kann die Bedieneinheit 11 eine oder die genannte Auswerte- und Steuereinrichtung 23 und eine elektronische Anzeigeeinrichtung 31 aufweisen (vgl. Fig. 2), wobei die Auswerte- und Steuereinrichtung 23 an der Anzeigeeinrichtung 31 vorbestimmte Darstellungswerte anzeigt, die Markierungen entsprechen, welche an einem Objektivring 16, 18 oder 20 des zugeordneten Kameraobjektivs 49 angebracht sind. Diese Darstellungswerte (z.B. Zahlenwerte und zugeordnete Positionswerte) können durch die dem Speicher 47 des Kennzeichnungsrings 43 ausgelesene Kodierung 59 vorbestimmt sein.

Der Benutzer kann somit die ihm von dem jeweiligen Objektivring 16, 18 oder 20 bekannten Darstellungswerte und deren Position in nahezu identischer Weise auch an der elektronischen Anzeigeeinrichtung 31 der Bedieneinheit 11 beobachten, während er den jeweiligen Parameter (z.B. Fokuslage) mittels des drehbaren Bedienelements 21 variiert. Die vorbestimmten Darstellungswerte können hierfür automatisch, nämlich allein durch Koppeln des Kennzeichnungsrings 43 mit der Bedieneinheit 11, eingelesen und an der Anzeigeeinrichtung 31 zur Darstellung gebracht werden. Optional können zusätzliche Informationen kodiert sein und dargestellt werden, z.B. eine Schärfentiefe.

Bei einer solchen Ausführungsform kann die Auswerte- und Steuereinrichtung 23 außerdem dazu ausgebildet sein, eine veränderliche Position der angezeigten Darstellungswerte (z.B. Werte der Fokuslage oder Irisblende) an der Anzeigeeinrichtung 31 in Abhängigkeit von Einstellwerten (Soll-Werte oder Ist-Werte) des Kameraobjektivs 49 festzulegen und für eine zeitlich veränderliche Darstellung zu berücksichtigen. Hierfür kann die Bedieneinheit 11 eine Empfangseinrichtung aufweisen (nicht gezeigt), um Positionsmesswerte von dem jeweiligen Objektiv-Stellmotor 15, 17 oder 19 zu empfangen.

Fig. 7A zeigt nochmals eine Darstellung eines Kennzeichnungsrings 43, der einen Speicher 47 aufweist, in welchem eine Kodierung 59 eingeschrieben ist. Diese Kodierung 59 ist dabei über eine Schnittstelle 63 von der Leseeinrichtung 57 der Bedieneinheit 11 kontaktierbar, wenn der Kennzeichnungsring 43 mit dem Bedienelement 21 gekoppelt ist. Um den Speicher 47 vor Beschädigungen durch Flüssigkeiten zu schützen, ist der Speicher 47 zumindest teilweise von einer wasserdichten Schutzhülle 65 umgeben, wobei diese eine Öffnung für die Schnittstelle 63 aufweist.

Die Kennzeichnung 45 des Kennzeichnungsrings 43 gemäß Fig. 7A entspricht einer Skala bzw. Werten eines eingestellten Parameters der Bewegtbildkamera 13, z.B. einer Fokuslage, wobei der Kennzeichnungsring 43 die übliche 1/x-Abhängigkeit des Parameters von der Drehstellung des Bedienelements 21 widerspiegelt.

Fig. 7B zeigt einen weiteren Kennzeichnungsring 43, dessen Kennzeichnung 45 eine - wie vorstehend erläutert - individuell mittels der Eingabeeinrichtung 27 konfigurierte Zuordnungsvorschrift repräsentiert. Abweichend von der herkömmlichen 1/x-Abhängigkeit ist dabei für einen Wertebereich zwischen einer ersten Drehstellung D1 und einer zweiten Drehstellung D2 des Bedienelementes 21 ein linearer Zusammenhang zwischen der Drehstellung des Bedienelements 21 und dem eingestellten Parameter konfiguriert. Außerhalb dieses Wertebereichs ist die herkömmliche 1/x-Abhängigkeit beibehalten.

Die individuelle Konfiguration der Zuordnungsvorschrift ermöglicht somit eine optimal an bestimmte Situationen anpassbare Fernsteuerung der Bewegtbildkamera 13, wobei es eine Konfiguration wie in Fig. 7B dargestellt gegenüber der Konfiguration der Fig. 7A beispielsweise ermöglicht, bei verhältnismäßig großen Werten des Parameters zwischen der ersten Drehstellung D1 und der zweiten Drehstellung D2 präzise Einstellungen vorzunehmen. Durch das Speichern der Zuordnungsvorschriften in dem Speicher 47 des jeweiligen Kennzeichnungsrings 43 kann die zu verwendende Zuordnungsvorschrift ferner unmittelbar bei einer Kopplung mit einer Bedieneinheit 11 angewandt werden, sodass die konfigurierten Zuordnungsvorschriften beispielsweise auch bei einer Verwendung von Leihgeräten problemlos durch Koppeln eines jeweiligen Kennzeichnungsrings 43 zur Verfügung stehen kann.

Wie erläutert kann die in dem Speicher 47 des Kennzeichnungsrings 43 gespeicherte Kodierung 59 alternativ oder zusätzlich einen Satz von Darstellungswerten für eine elektronische Darstellung von Einstellwerten eines zugeordneten Kameraobjektivs 49 repräsentieren. Diese Darstellungswerte können somit auf einfache und fehlersichere Weise automatisch eingelesen und an einer Anzeigeeinrichtung 31 zur Darstellung gebracht werden.

### Bezugszeichenliste

- 11: Bedieneinheit
- 13: Bewegtbildkamera
- 15: erster Objektiv-Stellmotor
- 16: erster Objektivring
- 17: zweiter Objektiv-Stellmotor
- 18: zweiter Objektivring
- 19: dritter Objektiv-Stellmotor
- 20: dritter Objektivring
- 21: Bedienelement
- 23: Auswerte- und Steuereinrichtung
- 23': Auswerte- und Steuereinrichtung
- 25: Ausgabeeinrichtung
- 26: Empfangseinrichtung
- 27: Eingabeeinrichtung
- 29: Basisteil
- 31: Anzeigeeinrichtung
- 33: Positionsgeber
- 35: Stellwertmarkierung
- 37: Speicher der Fernsteuereinrichtung
- 39: Taste
- 41: Funkempfänger
- 43: Kennzeichnungsring
- 45: Kennzeichnung
- 47: Speicher des Kennzeichnungsrings
- 49: Wechselobjektiv
- 51: Objektivring-Antriebseinheit
- 53: Sucher
- 55: Kamerakörper
- 57: Leseeinrichtung
- 59: Kodierung
- 61: Schreibeinrichtung
- 63: Schnittstelle
- 65: wasserdichte Schutzhülle
- 67: Schieberegler
- 69: Führung
- 71: Koppeleinrichtung
- 73: Anzeige
- 75: Haltestange
- 76: Signalleitung
- 77: Außenseite
- 79: Aussparung

- D: Drehachse
- P: Positionssignal
- S: Stellsignal

## Patentansprüche

1. Fernsteuereinrichtung für einen Objektiv-Stellmotor (15, 17, 19) einer Bewegtbildkamera (13) mit einer Bedieneinheit (11), wobei die Bedieneinheit (11)
- ein Basisteil (29),
- ein relativ zu dem Basisteil (29) um eine Drehachse (D) drehbares Bedienelement (21) zum Einstellen von Steuerbefehlen für den Objektiv-Stellmotor (15, 17, 19), und
- einen Positionsgeber (33) aufweist, welcher dazu ausgebildet ist, eine jeweilige Drehstellung des Bedienelementes (21) relativ zu dem Basisteil (29) zu erfassen und entsprechende Positionssignale (P) zu erzeugen;
wobei das Bedienelement (21) dazu ausgebildet ist, einen mit dem Bedienelement (21) wahlweise koppelbaren oder von dem Bedienelement (21) lösbaren Kennzeichnungsring (43) zum Kennzeichnen der einstellbaren Steuerbefehle in drehfester Kopplung aufzunehmen, wobei die Bedieneinheit (11) eine Leseeinrichtung (57) aufweist, die dazu ausgebildet ist, eine an einem gekoppelten Kennzeichnungsring (43) gespeicherte Kodierung (59) auszulesen.

2. Fernsteuereinrichtung nach Anspruch 1,
wobei die Bedieneinheit (11) eine Schreibeinrichtung (61) umfasst, welche dazu ausgebildet ist, eine in der Fernsteuereinrichtung gespeicherte Kodierung (59) an einen gekoppelten Kennzeichnungsring (43) zu übermitteln.

3. Fernsteuereinrichtung nach Anspruch 1 oder 2,
wobei die Fernsteuereinrichtung eine Auswerte- und Steuereinrichtung (23, 23') aufweist, welche dazu ausgebildet ist, gemäß einer Zuordnungsvorschrift in Abhängigkeit von den Positionssignalen (P) die Stellsignale (S) für den Objektiv-Stellmotor (15, 17, 19) zu ermitteln, wobei die Auswerte- und Steuereinrichtung (23) dazu ausgebildet ist, die Zuordnungsvorschrift anhand der ausgelesenen Kodierung (59) zu ermitteln.

4. Fernsteuereinrichtung nach Anspruch 3,
wobei die Fernsteuereinrichtung einen Speicher (37) zum Speichern mehrerer Zuordnungsvorschriften aufweist, wobei die Auswerte- und Steuereinrichtung (23, 23') dazu ausgebildet ist, in Abhängigkeit von der ausgelesenen Kodierung (59) eine der gespeicherten mehreren Zuordnungsvorschriften auszuwählen.

5. Fernsteuereinrichtung nach Anspruch 3 oder 4,
die Auswerte- und Steuereinrichtung (23, 23') dazu ausgebildet ist, die ausgelesene Kodierung (59) als Zuordnungsvorschrift zu verwenden oder in eine Zuordnungsvorschrift umzuwandeln.

6. Fernsteuereinrichtung einem der Ansprüche 3 bis 5,
wobei die Bedieneinheit (11) eine Eingabeeinrichtung (27) zum Verändern und/oder Konfigurieren der Zuordnungsvorschrift aufweist.

7. Fernsteuereinrichtung nach einem der vorhergehenden Ansprüche,
wobei die Bedieneinheit (11) eine Auswerte- und Steuereinrichtung (23) und eine elektronische Anzeigeeinrichtung (31) aufweist, wobei die Auswerte- und Steuereinrichtung (23) dazu ausgebildet ist, an der Anzeigeeinrichtung (31) vorbestimmte Darstellungswerte anzuzeigen, wobei die Darstellungswerte jeweiligen Einstellwerten eines Objektivs (49) der Bewegtbildkamera (13) entsprechen und durch die ausgelesene Kodierung (59) vorbestimmt sind,

8. Fernsteuereinrichtung nach Anspruch 7,
wobei die Auswerte- und Steuereinrichtung (23) dazu ausgebildet ist, eine veränderliche Position der angezeigten Darstellungswerte an der Anzeigeeinrichtung (31) in Abhängigkeit von den Einstellwerten des Objektivs (49) festzulegen, wobei es sich bei den Einstellwerten des Objektivs (49) um Soll-Werte oder Ist-Werte eines Aufnahmeparameters des Objektivs (49) handelt.

9. Kennzeichnungsring (43) zum Kennzeichnen von Steuerbefehlen für einen Objektiv-Stellmotor (15, 17, 19) einer Bewegtbildkamera (13),
insbesondere zur Verwendung bei einer Fernsteuereinrichtung nach einem der vorhergehenden Ansprüche,
wobei der Kennzeichnungsring (43) dazu ausgebildet ist, wahlweise drehfest mit einem drehbaren Bedienelement (21) einer Fernsteuereinrichtung zum Einstellen von Steuerbefehlen für den Objektiv-Stellmotor (15, 17, 19) gekoppelt oder von dem Bedienelement (21) gelöst zu werden,
wobei der Kennzeichnungsring (43) eine Kennzeichnung (45) der einstellbaren Steuerbefehle trägt oder mit einer solchen Kennzeichnung (45) versehbar ist, und
wobei der Kennzeichnungsring (43) einen Speicher (47) aufweist, in dem eine Kodierung (59) gespeichert oder speicherbar ist, wobei der Speicher (47) eine Schnittstelle (63) aufweist oder mit einer Schnittstelle (63) verbunden ist, über welche die Kodierung (59) auslesbar und/oder einschreibbar ist.

10. Kennzeichnungsring (43) nach Anspruch 9,
wobei der Speicher (47) von einer wasserdichten Schutzhülle (65) umgeben ist.

11. Kennzeichnungsring (43) nach Anspruch 9 oder 10,
wobei die Kennzeichnung (45) des Kennzeichnungsrings (43) Skalenmarkierungen und/oder eine Skala von Zahlenwerten umfasst.

12. Kennzeichnungsring (43) nach einem der Ansprüche 9 bis 11,
wobei die Kodierung (59) einen Betriebsdatensatz für die gekoppelte Fernsteuereinrichtung repräsentiert, wobei die Schnittstelle (63) des Speichers (47) dazu ausgebildet ist, mit einer Leseeinrichtung (57) der gekoppelten Fernsteuereinrichtung zusammenzuwirken, um die Kodierung (59) aus dem Speicher (47) auszulesen.

13. Kennzeichnungsring (43) nach einem der Ansprüche 9 bis 12,
wobei die Kodierung (59) einen Satz von Darstellungswerten für eine elektronische Darstellung von Einstellwerten eines zugeordneten Kameraobjektivs (49) repräsentiert.

14. Kennzeichnungsring (43) nach einem der Ansprüche 9 bis 13,
wobei die Kennzeichnung (45) des Kennzeichnungsrings (43) einer Zuordnungsvorschrift zur Zuordnung der Steuerbefehle zu jeweiligen Drehstellungen des Bedienelementes (21) entspricht, wobei die Kodierung (59) die Zuordnungsvorschrift repräsentiert.

15. Fernsteuereinrichtung nach einem der Ansprüche 1 bis 8, mit einem Kennzeichnungsring (43) nach einem der Ansprüche 9 bis 14.

## Claims

1. A remote control device for a lens setting motor (15, 17, 19) of a motion picture camera (13), said remote control device comprising an operating unit (11), wherein the operating unit (11) has
- a base part (29),
- an operating element (21) rotatable relative to the base part (29) about an axis of rotation (D) for setting control commands for the lens setting motor (15, 17, 19), and
- a position encoder (33) which is configured to detect a respective rotational position of the operating element (21) relative to the base part (29) and to generate corresponding position signals (P);
wherein the operating element (21) is configured to receive a marking ring (43) in a rotationally fixed coupling for marking the settable control commands, said marking ring (43) being selectively couplable to the operating element (21) or releasable from the operating element (21), wherein the operating unit (11) has a reading device (57) which is configured to read a coding (59) stored at a coupled marking ring (43).

2. A remote control device according to claim 1,
wherein the operating unit (11) comprises a writing device (61) which is configured to transmit a coding (59) stored in the remote control device to a coupled marking ring (43).

3. A remote control device according to claim 1 or 2,
wherein the remote control device has an evaluation and control device (23, 23') which is configured to determine the setting signals (S) for the lens setting motor (15, 17, 19) in dependence on the position signals (P) according to a mapping rule, wherein the evaluation and control device (23) is configured to determine the mapping rule by means of the read coding (59).

4. A remote control device according to claim 3,
wherein the remote control device has a memory (37) for storing a plurality of mapping rules, wherein the evaluation and control device (23, 23') is configured to select one of the stored plurality of mapping rules in dependence on the read coding (59).

5. A remote control device according to claim 3 or 4,
the evaluation and control device (23, 23') is configured to use the read coding (59) as a mapping rule or to convert it into a mapping rule.

6. A remote control device according to any one of the claims 3 to 5,
wherein the operating unit (11) has an input device (27) for changing and/or configuring the mapping rule.

7. A remote control device according to any one of the preceding claims,
wherein the operating unit (11) has an evaluation and control device (23) and an electronic display device (31), wherein the evaluation and control device (23) is configured to display predetermined representation values at the display device (31), wherein the representation values correspond to respective setting values of a lens (49) of the motion picture camera (13) and are predetermined by the read coding (59).

8. A remote control device according to claim 7,
wherein the evaluation and control device (23) is configured to define a variable position of the displayed representation values at the display device (31) in dependence on the setting values of the lens (49), wherein the setting values of the lens (49) are desired values or actual values of a recording parameter of the lens (49).

9. A marking ring (43) for marking control commands for a lens setting motor (15, 17, 19) of a motion picture camera (13),
in particular for using with a remote control device according to any one of the preceding claims,
wherein the marking ring (43) is configured to be selectively rotationally fixedly coupled to a rotatable operating element (21) of a remote control device for setting control commands for the lens setting motor (15, 17, 19) or released from the operating element (21),
wherein the marking ring (43) bears a marking (45) of the settable control commands or can be provided with such a marking (45), and
wherein the marking ring (43) has a memory (47) in which a coding (59) is stored or can be stored, with the memory (47) having an interface (63) or being connected to an interface (63) via which the coding (59) can be read and/or can be written.

10. A marking ring (43) according to claim 9,
wherein the memory (47) is surrounded by a waterproof protective cover (65).

11. A marking ring (43) according to claim 9 or 10,
wherein the marking (45) of the marking ring (43) has scale markings and/or a scale of numerical values.

12. A marking ring (43) according to any one of the claims 9 to 11,
wherein the coding (59) represents an operating data set for the coupled remote control device, wherein the interface (63) of the memory (47) is configured to cooperate with a reading device (57) of the coupled remote control device in order to read the coding (59) from the memory (47).

13. A marking ring (43) according to any one of the claims 9 to 12,
wherein the coding (59) represents a set of representation values for an electronic representation of setting values of an associated camera lens (49).

14. A marking ring (43) according to any one of the claims 9 to 13,
wherein the marking (45) of the marking ring (43) corresponds to a mapping rule for mapping the control commands to respective rotational positions of the operating element (21), wherein the coding (59) represents the mapping rule.

15. A remote control device according to any one of the claims 1 to 8 comprising a marking ring (43) according to any one of the claims 9 to 14.

## Revendications

1. Dispositif de télécommande pour un servomoteur d'objectif (15, 17, 19) d'une caméra à images animées (13), comportant une unité de commande (11), l'unité de commande (11) comprenant
- une partie de base (29),
- un élément de commande (21) pouvant tourner par rapport à la partie de base (29) autour d'un axe de rotation (D) pour le réglage d'instructions de commande pour le servomoteur d'objectif (15, 17, 19), et
- un capteur de position (33) conçu pour détecter une position de rotation respective de l'élément de commande (21) par rapport à la partie de base (29) et pour générer des signaux de position (P) correspondants ;
dans lequel
l'élément de commande (21) est conçu pour recevoir par couplage solidaire en rotation une bague d'identification (43) qui peut au choix être couplée à l'élément de commande (21) ou être détachée de l'élément de commande (21) et qui est destinée à identifier les instructions de commande réglables, l'unité de commande (11) comprend un dispositif de lecture (57) conçu pour lire un codage (59) stocké sur une bague d'identification (43) couplée.

2. Dispositif de télécommande selon la revendication 1,
dans lequel l'unité de commande (11) comprend un dispositif d'écriture (61) conçu pour transmettre un codage (59), stocké dans le dispositif de télécommande, à une bague d'identification (43) couplée.

3. Dispositif de télécommande selon la revendication 1 ou 2,
dans lequel le dispositif de télécommande comprend un dispositif d'évaluation et de commande (23, 23') conçu pour déterminer, selon une règle d'affectation, en fonction des signaux de position (P), des signaux de réglage (S) pour le servomoteur d'objectif (15, 17, 19),
le dispositif d'évaluation et de commande (23) est conçue pour déterminer la règle d'affectation à l'aide du codage (59) lu.

4. Dispositif de télécommande selon la revendication 3,
dans lequel le dispositif de télécommande comprend une mémoire (37) pour stocker plusieurs règles d'affectation,
le dispositif d'évaluation et de commande (23, 23') est conçu pour sélectionner, en fonction du codage (59) lu, l'une desdites plusieurs règles d'affectation stockées.

5. Dispositif de télécommande selon la revendication 3 ou 4,
dans lequel le dispositif d'évaluation et de commande (23, 23') est conçu pour utiliser le codage (59) lu comme règle d'affectation ou pour le convertir en une règle d'affectation.

6. Dispositif de télécommande selon l'une des revendications 3 à 5,
dans lequel l'unité de commande (11) comprend un dispositif d'entrée (27) pour modifier et/ou configurer la règle d'affectation.

7. Dispositif de télécommande selon l'une des revendications précédentes, dans lequel l'unité de commande (11) comprend un dispositif d'évaluation et de commande (23) et un dispositif d'affichage électronique (31), le dispositif d'évaluation et de commande (23) étant conçu pour afficher des valeurs de présentation prédéterminées sur le dispositif d'affichage (31), les valeurs de présentation correspondant à des valeurs de réglage respectives d'un objectif (49) de la caméra à images animées (13) et étant prédéterminées par le codage (59) lu.

8. Dispositif de télécommande selon la revendication 7,
dans lequel le dispositif d'évaluation et de commande (23) est conçu pour définir une position variable des valeurs de présentation affichées sur le dispositif d'affichage (31) en fonction des valeurs de réglage de l'objectif (49), les valeurs de réglage de l'objectif (49) étant des valeurs de consigne ou des valeurs réelles d'un paramètre de prise de vue de l'objectif (49).

9. Bague d'identification (43) pour identifier des instructions de commande pour un servomoteur d'objectif (15, 17, 19) d'une caméra à images animées (13),
destinée en particulier à être utilisée dans un dispositif de télécommande selon l'une des revendications précédentes,
dans laquelle la bague d'identification (43) est conçue pour au choix être couplée solidairement en rotation à un élément de commande rotatif (21) d'un dispositif de télécommande pour le réglage d'instructions de commande pour le servomoteur d'objectif (15, 17, 19), ou être détachée de l'élément de commande (21),
la bague d'identification (43) porte une identification (45) des instructions de commande réglables ou peut être pourvue d'une telle identification (45), et la bague d'identification (43) comprend une mémoire (47) dans laquelle un codage (59) est stocké ou peut être stocké, la mémoire (47) présentant une interface (63) ou étant reliée à une interface (63) par laquelle le codage (59) peut être lu et/ou écrit.

10. Bague d'identification (43) selon la revendication 9,
dans laquelle la mémoire (47) est entourée d'une enveloppe de protection (65) étanche à l'eau.

11. Bague d'identification (43) selon la revendication 9 ou 10,
dans laquelle l'identification (45) de la bague d'identification (43) comprend des repères gradués et/ou une échelle de valeurs numériques.

12. Bague d'identification (43) selon l'une des revendications 9 à 11,
dans laquelle le codage (59) représente un ensemble de données de fonctionnement pour le dispositif de télécommande couplé, l'interface (63) de la mémoire (47) étant conçue pour coopérer avec un dispositif de lecture (57) du dispositif de télécommande couplé, afin de lire le codage (59) dans la mémoire (47).

13. Bague d'identification (43) selon l'une des revendications 9 à 12,
dans laquelle le codage (59) représente un ensemble de valeurs de présentation pour une présentation électronique de valeurs de réglage d'un objectif de caméra associé (49).

14. Bague d'identification (43) selon l'une des revendications 9 à 13,
dans laquelle l'identification (45) de la bague d'identification (43) correspond à une règle d'affectation pour l'affectation des instructions de commande à des positions de rotation respectives de l'élément de commande (21), le codage (59) représentant la règle d'affectation.

15. Dispositif de télécommande selon l'une des revendications 1 à 8, comportant une bague d'identification (43) selon l'une des revendications 9 à 14.
